# EUROPÄISCHE PATENTSCHRIFT

(11) **EP 2 075 058 B1**
(45) Veröffentlichungstag und Bekanntmachung des Hinweises auf die Patenterteilung: **20.10.2010**
(21) Anmeldenummer: 08019952.4
(22) Anmeldetag: 14.11.2008
(51) Int. Cl.: B01J 8/06

(54) **Rohrbündelreaktor**
Tube bundle reactor
Réacteur à faisceau tubulaire

(30) Priorität: 20.12.2007 DE 102007061477
(43) Veröffentlichungstag der Anmeldung: 01.07.2009
(73) Patentinhaber: MAN Diesel & Turbo SE, 86153 Augsburg (DE)
(72) Erfinder: Bank, Rolf, 94469 Deggendorf (DE); Verbeek, Dieter, 94535 Eging am See (DE); Berndl, Alfons, 94571 Schaufling (DE)
(74) Vertreter: Paustian, Othmar

(56) Entgegenhaltungen:
- EP-A- 1 270 065
- WO-A-00/17946
- DE-A1- 10 110 847

## Beschreibung

Die Erfindung bezieht sich auf einen Rohrbündelreaktor gemäß dem Oberbegriff von Anspruch 1. Die Erfindung bezieht sich auch auf ein Verfahren zur Messung eines Temperaturprofils in solchen Rohrbündelreaktoren.

Zur Durchführung von heterogen katalysierten Gasphasenreaktionen wie Oxidations-, Hydrierungs-, Dehydrierungs-, Nitrierungs-, Alkylierungsprozesse haben sich in der chemischen Industrie insbesondere Rohrbündelreaktoren als besonderer Bauart von Festbettreaktoren bewährt. Solche Rohrbündelreaktoren sind beispielsweise aus DE 2 207 166 A1 bekannt. Ein Rohrbündelreaktor umfasst einen Reaktorhauptteil mit einem vertikal angeordneten Reaktionsrohrbündel, in dessen Reaktionsrohren sich meist granularer Katalysator und ggf. auch Inertmaterial befindet. Die Reaktionsrohre sind an ihren Enden abdichtend in einem oberen bzw. in einem unteren Rohrboden befestigt. Das Rohrbündel ist von einem Reaktormantel umschlossen. Die Reaktion kann endotherm oder exotherm sein. Das Reaktionsgasgemisch wird den Reaktionsrohren über eine den betreffenden Rohrboden überspannende Reaktorhaube zu- und aus den Reaktionsrohren über eine den anderen Rohrboden überspannende Reaktorhaube als Produktgasgemisch abgeführt.

Stabile Reaktionsbedingungen werden dadurch geschaffen, dass die Außenseiten der Reaktionsrohre von einem Wärmeträger umströmt werden und dabei ein möglichst guter Wärmeübergang sichergestellt wird. Dies ist bei einem Wärmeträger ohne Phasenänderung dann der Fall, wenn die Reaktionsrohre quer angeströmt werden. Bei großen Rohrbündelreaktoren, die heute oftmals über 30.000 und mehr Reaktionsrohre verfügen, wird häufig der Wärmeträger mit ring- und scheibenförmigen Umlenkblechen mäanderförmig durch ein ringförmiges Rohrbündel geführt. Ein radial gleichförmiger Wärmeübergang kann z.B. durch in EP 1 569 745 A1 beschriebene Merkmale erreicht werden. Durch eine geeignete Strömungsführung, die durch eine entsprechende Gestaltung der Strömungsführungselemente oder auch durch zusätzliche Wärmeträgerkreisläufe z.B. nach DE 2 201 528 B1 erreicht wird, kann entlang der Reaktionsrohre ein auf den jeweiligen Prozess optimiertes Temperaturprofil eingestellt werden.

Der Wärmeträger wird durch eine außerhalb des Reaktors befindliche Umwälzeinrichtung über Ringkanäle auf den Reaktorumfang verteilt und strömt über eine Vielzahl von Mantelöffnungen in den Mantelraum des Reaktors ein. Der aus dem Reaktor austretende erwärmte Wärmeträger wird in einem außerhalb des Reaktors befindlichen Kühler gekühlt.

Zur Beurteilung des Reaktionsablaufes im Reaktor und zur optimalen Steuerung des Reaktionsprozesses hinsichtlich Produktqualität und Umsatz ist die Erfassung der Temperatur innerhalb der Katalysatorschüttung in axialer Richtung von entscheidender Bedeutung. Bei einer Reihe von katalytischen Gasphasenreaktionen, im Besonderen bei katalytischen Partialoxidationsreaktionen, kommt es im Anfangsbereich des Reaktionsrohrs zu einer verstärkten Wärmeentwicklung unter Ausbildung eines Temperaturmaximums, dem so genannten "Hot Spot". Im Betrieb ist die Kenntnis der Hot Spot-Temperatur außerordentlich wichtig, damit bei Überschreiten einer zulässigen Temperatur der Prozess entsprechend verändert werden kann. Ansonsten kommt es zu einer Schädigung des Katalysators mit einer Verschlechterung von Umsatz, Selektivität und Ausbeute.

Um den messtechnischen Aufwand in Grenzen zu halten, werden die Temperaturen nur eines Teils der Reaktionsrohre gemessen. Die Bedingungen der nicht überwachten Reaktionsrohre werden von denen der überwachten Reaktionsrohre abgeleitet. Hierzu werden so genannte Thermorohre verwendet. Diese enthalten Temperaturmesseinrichtungen. Mit Katalysator gefüllt sind es Reaktionsrohre, bei denen die Temperatur längs des Strömungsweges in der Katalysatorschüttung gemessen wird.

Zur Temperaturmessung kommen im Wesentlichen zwei Verfahren zum Einsatz. Bei beiden Verfahren wird in der Regel ein Schutzrohr zentral in das Thermorohr geführt. Anschließend wird Katalysator in den Ringraum zwischen äußerer Wand des Schutzrohrs und innerer Wand des Thermorohres eingefüllt. Das Schutzrohr verbleibt in dieser Position. Darauf folgend wird in das Schutzrohr ein Thermometer eingeführt, welches nach unterschiedlichen physikalischen Prinzipien arbeiten kann und welches eine oder mehrere Einzel-Temperaturmessstellen haben kann. Die am meisten verbreiteten Ausführungen sind Widerstandsthermometer und Thermoelemente, wobei bevorzugt Thermoelemente verwendet werden. Letztere haben einen nur geringen Platzbedarf, wodurch es möglich ist, in axialer Richtung auch mehrere einzelne Temperaturmessstellen anzuordnen.

In dem ersten Verfahren besteht diese Temperaturmesseinrichtung aus einem einzelnen Thermometer, welches axial im Schutzrohr verschoben wird. Der Vorteil dieses Verfahrens liegt darin, dass der Durchmesser des Schutzrohrs sehr klein gewählt werden kann (z.B. 3,2 mm und kleiner), weil nur ein einziges Thermometer erforderlich ist. Auf diese Weise wird das Reaktionsgeschehen im Reaktionsrohr nur minimal beeinflusst. Mit dem Thermometer kann jede beliebige Stelle entlang des Reaktionsrohres angefahren und die Temperatur gemessen werden, so dass die Anzahl und die Orte der Temperaturmessungen jederzeit auf das Reaktionsgeschehen angepasst werden können.

Bei diesem Verfahren kann zwar das gesamte Temperaturprofil entlang der gesamten Strecke eines Reaktionsrohrs lückenlos erfasst werden, eine solche Vorrichtung muss jedoch etwa so lang sein wie das Reaktionsrohr und benötigt spezielle Führungseinrichtungen und ist daher mechanisch sehr empfindlich, so dass das Verfahren nur in kleineren Labor- und Pilotreaktoren durchgeführt wird. Überdies kann das Temperaturprofil nur für einen stationären Betriebszustand gemessen werden, da das Thermometer an jedem Messpunkt erst eine gewisse Zeit stehen bleiben muss, damit das Thermometer die Temperatur der neuen Messposition annehmen kann. Misst das Thermometer also beispielsweise beim Anfahren des Reaktors oder bei Änderungen der Prozessparameter die Temperatur an einem Ende des Thermorohrs, so kann sich die Temperatur am anderen Ende im Vergleich zur ersten Messung schon wieder völlig geändert haben. Wird der gesamte Bereich zu schnell durchfahren, so kann es sein, dass keine der Temperaturen richtig ermittelt wird, da die Angleichungszeit für die Temperatur für eine Messposition zu kurz ist. Weiterhin ist das verschiebliche Thermometer empfindlich und aufwändig in der Installation und beim Betrieb. Für einen Einsatz in großtechnischen, kommerziellen Rohrbündelreaktoren ist es daher nicht geeignet.

Bei dem zweiten Verfahren wird eine Vielzahl von Thermometern, die axial in festen gleichen oder ungleichen Abständen angeordnet sind, in das Schutzrohr geführt. Bei dieser Ausführung werden als Thermometer besonders bevorzugt Thermoelemente verwendet. Diese Vielzahl von Thermometern befindet sich zum mechanischen Schutz häufig in einem "Thermoschutzrohr". Diese axial mehrfache Anordnung von Thermometern wird als "Multipoint-Thermometer" oder als "Stufen-Thermometer" bezeichnet, im Folgenden mit "STM" abgekürzt. Mit Hilfe dieses STM stehen die Temperaturen aller Einzel-Messpositionen zeitgleich zur Verfügung. Bei Reaktionen mit ausgeprägten Temperatur-Extremstellen werden üblicherweise die Thermometer in engeren Abständen angeordnet, um diese kritischen Bereiche möglichst genau erfassen zu können.

Das zweite Verfahren unter Verwendung eines STM hat den Nachteil, dass die vielen Thermometer eine gewisse Querschnittsfläche benötigen und deshalb entsprechend der Durchmesser des Thermoschutzrohrs und in der Folge auch der Durchmesser des umgebenden Schutzrohrs größer ist als beim ersten Verfahren mit verschieblichem Einzel-Thermometer. Da mit zunehmendem Durchmesser des Schutzrohrs die Freisetzung der Wärme bei exothermen Reaktionen im Inneren des Thermorohrs verkleinert wird, entsprechen die dort gemessenen Temperaturen immer weniger den Temperaturen in Reaktionsrohren ohne Temperaturmesseinrichtungen.

Ein weiterer Nachteil besteht darin, dass es keine Informationen über die Temperaturen zwischen zwei innerhalb eines STM befindlichen axial benachbarten Thermometern gibt. Kleinere Abstände verbessern die Situation, beseitigen den Nachteil jedoch nicht, da der Bereich des Hot Spot relativ klein sein kann und eine Länge von nur etwa 10 mm bis 60 mm einnehmen und so unentdeckt bleiben kann. Darüber hinaus altert der Katalysator im Laufe der Zeit, was dazu führen kann, dass sich der Hot Spot in Bereiche bewegt, wo benachbarte Thermometer größere Abstände zueinander haben.

Bei jedem Verfahren ist man bestrebt, den Durchmesser des Thermoschutzrohrs bzw. des Schutzrohrs so klein wie möglich zu machen, um weitgehend die gleichen Reaktionsbedingungen wie in den Reaktionsrohren ohne Temperaturmesseinrichtung zu erhalten. Weiterhin kann der Durchmesser des Thermorohrs und damit des Ringraums mit der Katalysatorfüllung etwas vergrößert werden, um die Rohrquerschnittsfläche auszugleichen, die vom Schutzrohr des STM in Anspruch genommen wird.

Um einen Überblick über die unterschiedlichen Temperaturverhältnisse auch in radialer Richtung des Rohrbündels zu erhalten, werden üblicherweise die Thermorohre repräsentativ über den Rohrbündelquerschnitt verteilt.

Konstruktiv einfache Ausführungen von Stufen-Thermoelementen wurden beispielsweise in US 4 075 036 B oder in DE 10 2005 023 869 A1 (=US 7 175 343 B2) beschrieben. Im Gegensatz zu diesen beiden Schriften sind bei einer Ausführung nach US 4 385 197 B die einzelnen Thermoelemente durch thermisch leitende federnde Elemente mit der Schutzrohrwand verbunden. Solche Konstruktionen erfordern relativ große Durchmesser und haben daher einen großen Platzbedarf. Für den Einbau in Thermorohre, in denen Reaktionen ablaufen, eignen sie sich nicht.

Die Anwendung eines solchen Stufen-Thermometers in einem Rohrbündelreaktor ist z.B. in EP 1 484 299 A1 beschrieben. Im Rahmen des dort beschriebenen Verfahrens wird ein Stufen-Thermometer in ein in einem Thermorohr befindliches Schutzrohr eingeführt, wo es an mehreren festen Positionen die Temperaturen misst. Dabei können die Abstände der einzelnen Thermometer gleich oder im Anfangsbereich kleiner sein. Dieses Stufen-Thermometer ist insofern beweglich, als dass es zur Montage in ein Thermorohr einführbar ist, im Gegensatz zu einer festen Installation. Die Einzel-Thermometer sind im eingesetzten Zustand über die gesamte Rohrlänge verteilt und festen Positionen längs des Rohres zugeordnet. Im Betrieb wird die Temperatur ausschließlich an diesen festen Positionen gemessen; ein Verschieben findet nicht statt.

Stufen-Thermometer werden meist als Stufen-Thermoelemente ausgeführt. Sie werden in einer Vielzahl von Ausführungen von verschiedenen Herstellern angeboten.

In EP 0 873 783 A1 wird ein Rohrbündelreaktor und ein Verfahren zur Temperaturmessung in einem Rohrbündelreaktor beschrieben, wobei das Verhältnis von Masse der Feststoffteilchen zur freien Querschnittsfläche und der Druckverlust von Thermorohr und Reaktionsrohr ohne Einbauten gleich ist. Dies wird durch Feststoffteilchen unterschiedlicher Größe und/oder unterschiedlicher Geometrie erreicht. Als eigentliche Temperaturmesseinrichtung sind alternativ entweder ein axial verschiebliches Einzel-Thermoelement oder ein Stufen-Thermoelement mit festen Messpositionen, beide in Schutzrohren, vorgesehen.

Eine ähnliche Verfahrensweise ist in der gattungsgemäßen EP 1 270 065 A1 beschrieben. Ein gleicher Druckverlust in den Reaktionsrohren und in den Thermorohren wird hier dadurch erreicht, dass sowohl in die Reaktionsrohre als auch in die Thermorohre Feststoffteilchen gleicher Größe eingefüllt werden und die Feststoffeilchen in die Thermorohre mit einer geringeren Geschwindigkeit eingefüllt werden. Das Verfahren ist nicht nur für Thermorohre, sondern auch für Messeinrichtungen zur Druckmessung vorgesehen. Die Messeinrichtungen befinden sich optional in Schutzrohren auf der Rohrachse und sind wie in EP 0 873 783 A1 entweder axial beweglich oder in mehrfacher Ausführung mit festen Abständen ausgeführt. Die Messeinrichtungen sind mit Schwingungsdämpfern gegen die Innenwand des Thermorohrs abgestützt.

In US 4 342 699 B1 wird ein Verfahren zur Herstellung von Maleinsäureanhydrid mit gestufter steigender Katalysatoraktivität und besonderer Kreisgasführung beschrieben. In der Beschreibung des dabei verwendeten Reaktors wird allgemein auf den Einsatz eines Thermorohres hingewiesen. Auf die Art der Temperaturmessung wird nicht eingegangen. Bei der Versuchseinrichtung zum Nachweis der besonderen Wirkungen des beanspruchten Verfahrens wird ein einzelnes Reaktionsrohr mit einem axial beweglichen und in einem Schutzrohr befindlichen Stufen-Thermoelement verwendet. So ist dieses bewegliche Stufen-Thermoelement nur im Zusammenhang mit einem Versuchsreaktor mit einem einzelnen Reaktionsrohr bekannt, wobei auf den Aufbau und auf den Betrieb im Einzelnen nicht eingegangen wird.

In der WO 00/17946 A2 wird ein Verfahren in Rohrbündelreaktoren vorgestellt, mit dem ein thermisches "Durchgehen" der Reaktion erkannt werden kann. Es besteht darin, dass man einen Reaktor mit einer Vielzahl von Thermorohren ausstattet, die Einzel- oder Stufenthermometer enthalten. Dabei wird ein Teil dieser Thermorohre zur Verringerung des Durchflusses mit Drosselelementen versehen. Die Thermorohre mit den Drosselelementen können die Reaktionswärme schlechter abgeben und zeigen ein Durchgehen der Reaktion schneller an als Thermorohre ohne Drosselelemente. Die Reaktion wird bei den gewünschten Reaktionsbedingungen durchgeführt. Durch einen Vergleich der Unterschiede der Temperaturprofile zwischen beiden Thermorohrtypen kann erkannt werden, ob Anzeichen für ein thermisches Durchgehen der Reaktion vorliegen.

Nachteilig bei diesem Verfahren ist jedoch, dass die Reaktion in den Thermorohren allein auf Grund der verringerten Durchflussmenge durchgehen kann, obgleich die Reaktionen in allen anderen Reaktionsrohren normal ablaufen. Dadurch sinkt die Verfügbarkeit. Ferner gibt es keine Informationen zu den Temperaturen zwischen den einzelnen Thermometern innerhalb eines STM. Die erhaltenen Temperaturverläufe sind auf diese Weise wenig repräsentativ.

Ein verschiebliches Stufen-Thermometer ist aus WO 2005/063374 A1 in der Anwendung bei einem Reaktor mit Thermoblechplatten bekannt. Hierbei wird als Regelsignal zur Überwachung, Steuerung und/oder Regelung von Reaktionen die Temperatur ausgewählt, die in einem oder mehreren Spalten, an zwei oder mehreren Messpositionen, die über die Höhe jedes Spaltes zwischen zwei Thermoblechplatten verteilt angeordnet sind, bestimmt wird. In einem Ausführungsbeispiel befindet sich ein Stufen-Thermoelement in einem zwischen zwei Thermoblechen befindlichen Schutzrohr. Dabei ist das Stufen-Thermoelement bevorzugt mit äquidistant angeordneten Messpositionen ausgestattet und kann kontinuierlich in dem Schutzrohr zur Messung des Temperaturprofils verschoben werden. Über die Art und Weise der Verschiebung dieses Stufen-Thermoelements, insbesondere in einem großtechnischen, kommerziellen Reaktor, wird auch hier keine Aussage gemacht.

Der Erfindung liegt die Aufgabe zu Grunde, bei einem Rohrbündelreaktor und einem Verfahren der eingangs genannten Art sowohl die Auflösung als auch die Geschwindigkeit der Messung eines Temperaturprofils entlang der axialen Strömungsrichtung zu erhöhen.

Erfindungsgemäß wird diese Aufgabe bei einem gattungsgemäßen Rohrbündelreaktor durch die kennzeichnenden Merkmale des Anspruchs 1 gelöst. Ferner wird die Aufgabe durch ein Verfahren gemäß Anspruch 23 gelöst.

Bevorzugte Ausgestaltungen sind in den Unteransprüchen angegeben.

Mit den erfindungsgemäßen Maßnahmen können die Temperaturprofile in Strömungsrichtung in einer Festkörperschüttung und/oder im Wärmeträger mit einer hohen Auflösung unter Verwendung einer kompakten Messapparatur mit einem maschinellen Stellantrieb ermittelt werden. Durch Verwendung von STM verkürzt sich der Bewegungsweg zur Aufnahme des vollständigen Temperaturprofils entlang des gesamten Messbereiches auf den Abstand zwischen zwei benachbarten Thermometern x(TM).

Durch die Ausrüstung der Thermorohre mit maschinellen Stellantrieben ist es möglich, erstens eine große Anzahl von genauen, repräsentativen Temperaturmessungen in mehreren Thermorohren gleichzeitig durchzuführen und zweitens diese Temperaturmessungen von einer nicht direkt am Reaktor gelegenen Leitstelle aus durchzuführen.

Durch das gleichzeitige Vorliegen einer detaillierten Temperaturverteilung in axialer und in radialer (bei mehreren im Rohrbündel radial verteilten Thermorohren) Richtung des Rohrbündelreaktors können schnell entsprechende Maßnahmen ergriffen werden, wie z.B. Volumenstrom- oder Konzentrationsänderungen.

Die Störung der Partikelschüttung und damit die Beeinflussung der darin ablaufenden Reaktionen ist gering und wird umso geringer, je kleiner der Durchmesser des Schutzrohres gewählt wird. Zu berücksichtigen ist dabei die Begrenzung der möglichen Anzahl an Thermometern und die damit verbundene Vergrößerung des Arbeitsweges der maschinellen Positioniereinheit.

Mit dem erfindungsgemäßen Rohrbündelreaktor wird ein kommerziell nutzbarer Produktionsreaktor zur Verfügung gestellt, mit dem in der Regel relativ große Mengen eines Produktes hergestellt werden, im Gegensatz zu einem Labor- oder Technikumsreaktor, dessen Aufgabe in erster Linie darin besteht, Prozesse bezüglich ihrer Parameter näher zu untersuchen und zu optimieren.

Insbesondere ist ein erfindungsgemäßer Rohrbündelreaktor zur Durchführung katalytischer Gasphasenreaktionen geeignet, wobei es hier keine Einschränkungen bezüglich ein- oder mehrzoniger Ausführung gibt.

Bei einem erfindungsgemäßen Rohrbündelreaktor gibt es keine Einschränkungen bezüglich der üblichen Abmessungen von Reaktordurchmesser, Reaktorhöhe, Anzahl, Anordnung, Länge, Durchmesser der Rohre, Führung des Wärmeträgers oder Art des Wärmeträgers.

Ein erfindungsgemäßer Rohrbündelreaktor ist bezüglich des in ihm zirkulierenden Wärmeträgers nicht eingeschränkt. Es kann grundsätzlich jeder bekannte Wärmeträger verwendet werden wie z.B. Wärmeträgeröl. Als Wärmeträger wird jedoch bevorzugt ein Wärmeträgersalz verwendet. Die Auswahl wird in Abhängigkeit von der optimalen Temperatur für den Prozess bestimmt. Der Wärmeträger wird durch eine außerhalb des Reaktors befindliche Umwälzeinrichtung über Ringkanäle auf den Reaktorumfang verteilt und strömt über eine Vielzahl von Mantelöffnungen in den Mantelraum des Reaktors ein. Diese Mantelfenster werden z.B. nach DE 16 01 162 A1 so bemessen, dass die Summe des Druckverlustes aus der Strömung in der Ringleitung und dem Durchtritt durch die Mantelöffnungen für alle Stromfäden konstant ist. Dadurch wird der Wärmeträger über den Umfang des Mantels gleichmäßig verteilt und ein gleichmäßiger radialer Eintritt in den Mantelraum des Rohrbündelreaktors gewährleistet. Für den Austritt des Wärmeträgers durch die Mantelöffnungen am Austritt aus dem Rohrbündelreaktor gilt diese vom messbaren Druckverlust abgeleitete Querschnittsbemessung in gleicher Weise. Unter Anwendung von bekannten Gesetzmäßigkeiten aus der Strömungsmechanik erhält man für die Mantelöffnungen auf der Eintrittsseite in Strömungsrichtung immer kleiner werdende Mantelöffnungen, auf der Austrittsseite werden die Mantelöffnungen in Strömungsrichtung immer größer. In WO 2006/118387 A1 wird dieses Prinzip ergänzt durch eine in radialer Richtung zusätzliche Schlitzwand mit gleichförmigen Schlitzöffnungen zur weiteren Vergleichmäßigung der Strömung. Der aus dem Reaktor austretende erwärmte Wärmeträger wird in einem außerhalb des Reaktors befindlichen Kühler gekühlt. Diese Vielzahl an konstruktiven Merkmalen stellen die Rahmenbedingungen für einen optimalen Betrieb dar.

Die Rohranzahl liegt in der Regel im Bereich zwischen 1000 und 45000 Rohren, bevorzugt zwischen 10000 und 40000 und besonders bevorzugt zwischen 20000 und 38000 Rohren. Die Länge der Reaktionsrohre liegt in einem Bereich zwischen 2 m und 18 m, bevorzugt zwischen 3 m und 16 m und besonders bevorzugt zwischen 4 m und 10 m. Allgemein gilt, dass der Wärmeübergang vom Inneren des Reaktionsrohres bis zum das Reaktionsrohr umströmenden Wärmeträger umso besser ist, je kleiner der Durchmesser der Reaktionsrohre ist. Bei gegebener Querschnittsfläche für eine Katalysatorschüttung erhöht dies natürlich die Rohranzahl und damit die Investitionskosten. Vergrößert man den Reaktionsrohrdurchmesser, so wird die erforderliche Rohranzahl kleiner und die Investitionskosten sinken. Andererseits verschlechtert sich dadurch der Wärmeabtransport vom Reaktionsrohrinneren an die Reaktionsrohrwand mit der Folge einer Temperaturerhöhung, die Umsatz, Selektivität und Ausbeute mindert und/oder den Katalysator schädigt. Die Festlegung des Reaktionsrohrdurchmessers ist stark vom jeweiligen Prozess abhängig. Der Innendurchmesser der Reaktionsrohre liegt in einem Bereich zwischen 16 mm und 50 mm und bevorzugt zwischen 20 mm und 40 mm. Für bestimmte Reaktionen haben sich auch größere Durchmesser bis zu 110 mm als vorteilhaft herausgestellt.

Der Rohrbündelreaktor kann einzonig oder mehrzonig ausgeführt sein. Bei der mehrzonigen Ausführung trennt mindestens eine horizontale Zwischenplatte den Wärmeträgerraum in mindestens zwei getrennte Wärmeträgerräume, in denen voneinander unterschiedliche Temperaturen eingestellt werden können. Zur optimalen Anpassung an den jeweiligen Prozess können die Reaktions- bzw. die Thermorohre je Zone eigene, angepasste Füllungen enthalten. Mehrere getrennte Wärmeträgerräume können auch dadurch erreicht werden, dass z.B. zwei Reaktoren so miteinander verbunden werden, dass deren Rohrböden direkt oder mit geringem Abstand gegenüber liegen. Eine weitergehende Trennung der Wärmeträgerräume kann dadurch erreicht werden, dass der Gesamtprozess in mehreren in Reihe geschalteten und mit Rohrleitungen verbundenen Rohrbündelreaktoren durchgeführt wird.

Das Temperaturmessprinzip wird durch die vorliegende Erfindung in keiner Weise eingeschränkt. In Abhängigkeit von den Prozessbedingungen kommen z.B. alle in DIN 43710 und in DIN EN 60584 beschriebenen Thermoelemente in Frage, wobei Thermoelemente vom Typ K nach DIN EN 60584 bevorzugt werden. Darüber hinaus können auch andere physikalische Temperaturmessprinzipien verwendet werden, wie Platin-Widerstandsthermomenter, z.B. PT-100 oder PT-1000, Widerstandsthermometer oder Halbleitersensoren. Erfindungsgemäß werden jedoch die Stufen-Thermometer bevorzugt als Stufen-Thermoelemente ausgeführt. In einer weit verbreiteten Ausführungsart besteht ein solches Stufen-Thermoelement aus einer Vielzahl von parallel angeordneten einzelnen Thermoelementen unterschiedlicher Länge. Jedes einzelne Thermoelement hat eigene Leitungen zur Auswerteeinheit. Ein Thermoelement ist eine spezielle Art eines Thermometers mit zwei unterschiedlichen Thermodrähten, die an ihren freien Enden miteinander verbunden sind. Liegen an den Verbindungsstellen unterschiedliche Temperaturen an, so wird eine elektrische Spannung erzeugt, die zur Temperaturmessung benutzt werden kann.

Zur Steuerung und/oder Überwachung der Reaktionstemperaturen in den Reaktionsrohren werden eine Anzahl von katalysatorgefüllten Thermorohren, die im Folgenden auch als KAT-Thermorohre bezeichnet werden, so über den Reaktorquerschnitt verteilt, dass die Temperaturen in axialer und in radialer Richtung im Reaktor möglichst genau erfasst werden. Die Anzahl solcher Thermorohre richtet sich nach den Erfordernissen des Prozesses, der speziellen Konstruktion und der Gesamtzahl der Reaktionsrohre. Sie wird vom Betreiber festgelegt. Es kann Gründe geben, nur einen Teil dieser Thermorohre mit axial verschieblichen STM auszustatten und den anderen Teil mit ortsfesten STM. Erfindungsgemäß jedoch beträgt der Anteil der Thermorohre mit axial beweglichen STM an der Gesamtmenge von Thermorohren mit ortsfesten und mit axial beweglichen STM weniger als 100 %, bevorzugt weniger als 50% und besonders bevorzugt weniger als 10%, in jedem Falle jedoch mindestens 1 Stück.

Ein katalysatorgefülltes Thermorohr hat, bedingt durch die in ihm befindliche Temperaturmesseinrichtung, einen anderen Strömungsquerschnitt als ein Reaktionsrohr. Ein Einfluss auf den Reaktionsverlauf ist unvermeidlich. Die in einem solchen Thermorohr gemessene Temperatur kann damit niemals genau derjenigen Temperatur in einem Reaktionsrohr entsprechen. Mit einer Reihe von bekannten Maßnahmen wird nun versucht, die Messwertabweichungen in einem solchen Thermorohr auf ein Minimum zu begrenzen.

Damit das STM axial frei bewegt werden kann, ist es in einem Schutzrohr angeordnet bzw. geführt. Dieses ist so weit wie möglich in das Thermorohr gesteckt, um die Temperaturen im Thermorohr axial so vollständig wie möglich zu erfassen, in der Regel bis zum Katalysatorauflager. Durch handelsübliche Abstandshalter oder Zentriereinrichtungen ist es in radialer Richtung im Wesentlichen auf der Rohrachse zentriert. Bevorzugt werden solche Ausführungen eingesetzt, die die Strömung und die Partikelschüttung möglichst wenig beeinflussen, z.B. Spiralfedern mit nach außen zeigenden geraden oder gebogenen Federn. Das STM kann grundsätzlich auch von unten in das Reaktionsrohr eingeführt werden. Dabei besteht die Schwierigkeit, dass das Schutzrohr durch das Katalysatorauflager hindurch geführt werden muss. Aus diesem Grund wird das Schutzrohr mit STM bevorzugt von oben in das Thermorohr eingeführt.

Vorzugsweise ist das STM in dem Schutzrohr in einem Thermoschutzrohr angeordnet und das Thermoschutzrohr in dem Schutzrohr frei beweglich.

Das im Schutzrohr befindliche Thermometer ist ein empfindliches Messinstrument. Um ihm mechanische Stabilität zu geben und um es. bei Bewegungen vor mechanischen Schäden zu schützen, befindet es sich in einem axial beweglichen Thermoschutzrohr. Der Abstand des Thermoschutzrohrs zur Innenwand des Schutzrohrs ist möglichst gering, um die am Schutzrohr anliegende Temperatur möglichst genau und verzögerungsfrei zu erfassen. Andererseits muss er so groß sein, dass das Thermoschutzrohr im Schutzrohr frei beweglich ist.

Sollen bei einem Stufen-Thermometer (STM) die Temperaturmessstellen mehrerer Thermometer axial beabstandet in einem Thermoschutzrohr angeordnet werden, so müssen die einzelnen Thermodrähte gegeneinander und auch gegen benachbarte Thermometer isoliert werden. Zusätzlich brauchen die Thermodrähte mechanische Stabilität gegen Verformung und Beschädigung. Dies wird erreicht, indem ein jedes Thermometer von einer Thermohülse umgeben wird. Innerhalb der Thermohülse befindet sich ein Isolationsmaterial, mit dem die Thermodrähte gegeneinander und gegen die Wand der Thermohülse elektrisch isoliert werden.

Die Katalysatorpartikel und ggf. die Inertpartikel werden nach Einbau des Schutzrohrs meist manuell in das Thermorohr eingefüllt. Das Schutzrohr erhält zur Erleichterung der Montage erfindungsgemäß eine lösbare Verbindung zwischen Rohrboden und maschineller Positioniereinrichtung. Eine solche lösbare Verbindung kann z.B. ein Flansch sein, eine Klemmringverbindung, eine Schneidringverbindung oder eine Bajonettverbindung

Das zentral im Thermorohr gelegene Schutzrohr stellt eine zusätzliche Rohrwand dar. Die Folge ist eine Vergrößerung der Randgängigkeit, verbunden mit einer Verringerung der Schüttdichte der zwischen den Wänden befindlichen Partikel aus Katalysator- oder Inertmaterial mit nachteiligen Auswirkungen auf den Reaktionsablauf. Um den Einfluss des Schutzrohrs innerhalb des Thermorohrs ' zu begrenzen, ist man bestrebt, den Schutzrohrdurchmesser so klein wie möglich zu machen. Durch die Verschieblichkeit des STM können mehrere Messpositionen eines konventionellen STM angefahren werden, wodurch diese eingespart werden können. Durch die geringere Anzahl an Thermometern kann der erforderliche Gesamtquerschnitt für das STM gesenkt werden. Dadurch kann der Durchmesser des Thermoschutzrohrs verkleinert werden und damit auch der Durchmesser des Schutzrohrs. Wird trotzdem eine große Anzahl von Thermoelementen gewählt, so verringert sich der axiale Abstand benachbarter Thermometer. Der Arbeitsweg wird kleiner, die maschinelle Positioniereinrichtung wird kleiner, die Auflösung steigt. Andererseits vergrößern sich die Unterschiede in der Strömung von Thermorohr und Reaktionsrohr. In jedem Fall kann die Anzahl der Thermometer bei gleicher Anzahl axialer Messstellen kleiner als bei einem STM mit fester Position gewählt werden. Eine Abwägung von Vor- und Nachteilen von Anzahl und axialem Abstand der Thermoelemente muss für jeden einzelnen Fall gesondert durchgeführt werden. Zu berücksichtigen sind z.B. die Rohrlänge, die Baugröße der maschinellen Positioniereinheit oder das Verhältnis des Querschnitts des Schutzrohrs zum Querschnitt des Durchströmungsquerschnitts eines Reaktionsrohrs.

Ein Wärme leitender Kontakt der einzelnen Thermometer zum umgebenden Schutzrohr ist zwar wünschenswert. Dies spielt jedoch bei vorliegender Ausführung wegen der geringen radialen Abmessungen nur eine untergeordnete Rolle. Ein schneller Wärmetransport wird durch die geringen Wandstärken und Spalte der Abmessungen der erfindungsgemäßen Ausbildung erreicht. Unterstützt wird dies durch die Wärmestrahlung, die bei Temperaturen in der Größenordnung von mehreren Hundert Grad Celsius immer größere Bedeutung gewinnt.

Ein Thermometer kann aus einer Reihe von standardisierten Typen gewählt werden, beispielsweise aus einer Auswahl, die die Durchmesser 0,25 mm, 0,34 mm, 0,5 mm und 1,0 mm enthält. Je größer der Durchmesser ist, umso stabiler und langlebiger ist das Thermometer. Bei kleineren Durchmessern können mehr Thermometer in einem Thermoschutzrohr untergebracht werden. Es werden Thermometer mit einem Durchmesser von 0,2 bis 0,4 mm bevorzugt.

Die Anzahl der einzelnen Thermometer in einem STM ist abhängig von der Länge des Thermorohrs, der gewünschten Auflösung, dem zulässigen Fehler durch die Partikelverdrängung und den verfügbaren minimalen Durchmessern von Thermometern. Eine kleine Anzahl von Thermometern bedeutet geringere Kosten für das STM. Andererseits wird die maschinelle Positioniereinrichtung entsprechend größer und teurer. Umgekehrt bedeutet eine größere Anzahl von Thermometern einen kleinen Bewegungsweg mit einer entsprechenden kleineren und kostengünstigeren maschinellen Positioniereinrichtung. Erfindungsgemäß weist das Stufen-Thermometer eine Anzahl von Thermometern im Bereich zwischen 2 und 50, bevorzugt zwischen 4 und 40, besonders bevorzugt zwischen 6 und 30 und weiter bevorzugt zwischen 8 und 21 Thermometern auf.

Der Durchmesser des Thermoschutzrohrs liegt in Abhängigkeit von den Durchmessern und der Anzahl der Thermometer bevorzugt im Bereich von 2,0 bis 4,0 mm. Die Wandstärke der Thermoschutzrohre liegt im Bereich von 0,1 bis 1,0 mm. Auf diese Weise können z.B. 21 Thermometer mit einem Durchmesser von 0,25 mm in einem Schutzrohr mit einem Außendurchmesser von 3,6 mm angeordnet werden. Ein solches STM ist zwar empfindlich bei der Montage, im Betrieb ist es jedoch sehr robust und hat eine Standzeit, die vergleichbar ist mit STM, die Thermometer mit größeren Durchmessern haben.

Das Schutzrohr, in welches das STM eingeführt wird, hat einen Außendurchmesser im Bereich von 3,0 mm bis 8,0 mm und bevorzugt im Bereich von 3,2 mm bis 6,0 mm. Die Wandstärke liegt im Bereich von 0,5 mm bis 1,5 mm, bevorzugt im Bereich von 0,8 mm bis 1,2 mm. Es befindet sich vorzugsweise radial zentral in dem Thermorohr. Ein gleicher Abstand zur Innenwand des Thermorohrs wird durch Abstandshalter erreicht. Die Abstandshalter können beliebige auf dem Markt erhältliche Ausführungen sein. Bevorzugt werden Abstandshalter in der Form von Spiralfedern eingesetzt mit beiderseits tangential verlängerten Enden, die an der Rohrinnenwand enden. Eine solche Ausführung hat den Vorteil, dass sie nicht brechen kann, sie ist leicht anpassbar, besitzt eine gute Montierbarkeit und das Einfüllen der Katalysatorpartikel wird kaum behindert. Die Entscheidung insbesondere für die Anzahl der Thermometer wird vom Anlagenbetreiber nach seinen Kriterien getroffen.

Durch die Wahl eines möglichst kleinen Schutzrohrdurchmessers im Vergleich zum Thermorohr-Innendurchmesser wird wie oben beschrieben versucht, die Strömungsstörung so klein wie möglich zu halten. Sie kann jedoch niemals null sein. Daher ist die Art der Katalysatorschüttung aus einem aus dem Stand der Technik bekannten Verfahren so zu wählen, dass die Reaktionsbedingungen in Thermorohren und in Reaktionsrohren möglichst gleich sind.

Die Katalysator- bzw. Inertpartikel werden abhängig von der jeweiligen Reaktion ausgewählt. Die Reaktionen können entweder exotherm oder endotherm sein. Beispiele für geeignete Verfahren sind allgemein z.B. Oxidationsreaktionen, Partialoxidationsreaktionen, Dehydrierungen, Hydrierungen, oxidierende Dehydrierungen. Von den Partialoxidationen sind im speziellen Phthalsäureanhydrid aus O-Xylol, (Meth-)Acrolein aus Propen oder Propan und/oder (Meth-)Acrylsäure aus (Meth-)Acrolein zu nennen. Diese Prozesse können je nach Art in einem Einzonenreaktor, in einem Mehrzonenreaktor oder in mehreren hintereinander geschalteten Reaktoren durchgeführt werden.

Die dabei verwendeten Katalysator- bzw. Inertpartikel sind in ihrer Form nicht eingeschränkt. Oft verwendete Typen sind Raschig-Ringe, Pall-Ringe, Sattelformen oder Kugeln. Sie werden z.B. als Vollkatalysatoren eingesetzt, bei denen der Katalysator vollständig aus Katalysatormaterial besteht. Aus wirtschaftlichen Gründen kommen oft so genannte Schalenkatalysatoren zum Einsatz, bei denen auf die Oberfläche eines Trägerkörpers eine katalytisch wirksame Schicht nach einem aus dem Stand der Technik bekannten Verfahren aufgebracht wird. Vorzugsweise werden solche Partikel eingesetzt, die bei gegebenem Rohrinnendurchmesser eine möglichst große Oberfläche bei möglichst geringem Druckverlust haben und dabei einen möglichst guten Wärmeübergang zur Rohrinnenwand bewirken. Als Trägerkörper für den Katalysator kommen vorzugsweise Keramik oder Edelstahl in Frage. Während sich die Reaktionsrohre meist maschinell befüllen lassen, werden die Thermorohre in der Regel manuell befüllt. Nach bekannten Verfahren wird dabei der Druckverlust von Reaktionsrohren und Thermorohren aneinander angeglichen.

Das in dem Schutzrohr befindliche Stufen-Thermometer wird mit der Positioniereinrichtung vorzugsweise automatisiert von Messposition zu Messposition bewegt. Die Automatisierung der Positionierung ist gerade bei großen kommerziellen Produktionsreaktoren mit einer großen Anzahl von Thermorohren von Vorteil, wenn die Zugänglichkeit der STM für eine häufige Handsteuerung der maschinellen Positioniereinrichtung nicht ausreicht. Die Automatisierung wird erfindungsgemäß dadurch erreicht, dass das STM über eine Fernübertragungseinrichtung verfügt, die die damit ermittelten Messwerte an eine räumlich getrennte Leitstelle überträgt. Diese Leitstelle verfügt über Einrichtungen zum Empfang und zur Weiterverarbeitung der Messsignale sowie über Einrichtungen zur Steuerung der maschinellen Positioniereinrichtung.

Die Art der maschinellen Positioniereinrichtung ist nicht eingeschränkt. Es kann sich dabei um einen pneumatischen oder hydraulischen Antrieb handeln oder es kann ein Antriebsmotor verwendet werden, der mit einem Übersetzungsgetriebe oder mit Spindeln arbeitet. Erfindungsgemäß wird jedoch ein Schrittmotor eingesetzt. Dieser ist bevorzugt als Linearmotor ausgeführt. Diese Bauart hat den Vorteil, dass die Positionierung durch das Antriebsaggregat selbst erfolgt und keine Übersetzungen oder Getriebe benötigt werden.

Die maschinelle Positioniereinrichtung ist so beschaffen, dass sie über eine Vielzahl von Schritten und Haltepositionen entweder mit Handsteuerung und/oder mit einem Steuerungsprogramm betrieben werden kann, d.h. es kann damit jeder Punkt innerhalb des konstruktiv festgelegten Arbeitsweges angefahren werden.

Dabei ist das Stufen-Thermometer erfindungsgemäß so gestaltet, dass es die Temperaturen zumindest des mit Katalysator gefüllten Bereiches des Thermorohres vollständig messen kann. Dieser Katalysatorbereich liegt üblicherweise innerhalb des von Wärmeträger gekühlten Rohrabschnittes. Besitzt dieser Rohrabschnitt n Teilabschnitte, so werden wenigstens n Thermometer benötigt, die von einem Ende des Katalysatorbereiches um einen Arbeitsweg zum anderen Ende bewegt werden. Zusätzlich noch kann am anderen Ende ein weiteres Thermometer vorgesehen werden, welches für eine Kontrollmessung benutzt werden kann.

Vorteilhafterweise sind die axialen Abstände benachbarter Einzelthermometer innerhalb eines Stufen-Thermometers gleich. Dies vereinfacht die Herstellung und die Benutzung des STM sowie die Auswertung der Messergebnisse.

Bei Bedarf ist es jedoch gleichermaßen möglich, dass die einzelnen Thermometer des Stufen-Thermometers im Bereich des Hot Spots kleinere Abstände zueinander haben als die übrigen Thermometer. Dadurch werden die Bereiche von benachbarten Thermometern mehrfach gemessen. Diese redundante Betriebsweise erlaubt den Vergleich von verschiedenen Temperaturmessungen.

Die maschinelle Positioniereinrichtung ist in günstiger Weiterbildung der Erfindung so ausgelegt, dass der maximale Arbeitsweg des Stufen-Thermometers xmax bis zu 300%, bevorzugt bis zu 200% und besonders bevorzugt 100% eines Thermometer-Abstandes x(TM) beträgt. Diese Gestaltung hat den Vorteil, dass, z.B. im Falle einer 100%-ingen Übereinstimmung von maximalem Arbeitsweg und Thermometer-Abstand zumindest die Enden eines Thermometer-Abstandes von benachbarten Thermometern doppelt gemessen werden. Sind die Messwerte gleich, so kann man von einer guten Kalibrierung der Messinstrumente ausgehen, die Messwerte sind in diesem Fall sehr zuverlässig. Weichen die Messwerte eines Messpunktes voneinander stark ab, so sind die Messinstrumente entweder schlecht kalibriert, defekt oder es handelt sich um einen instationären Prozess. Die Vorrichtung bekommt damit selbst-überwachende Eigenschaften.

Die maschinelle Positioniereinrichtung wird oft in explosiblen Atmosphären eingesetzt. Daher wird diese erfindungsgemäß explosionssicher ausgeführt entsprechend der am Aufstellungsort geltenden Sicherheitsanforderungen.

Zur Kontrolle des Reaktionsablaufs ist weiterhin die Kenntnis der Wärmeträgertemperatur von Vorteil. Bevorzugt ist daher ein erfindungsgemäßer Rohrbündelreaktor mit mindestens einem zusätzlichen Thermorohr mit einem Stufen-Thermometer zur Messung der Wärmeträgertemperatur ausgestattet. Ein solches STM misst nicht die Temperatur im Inneren eines Thermorohres, sondern die Temperatur der Thermorohrinnenwand, so dass das Thermorohr in diesem Fall innen anders aufgebaut ist. Zur einfachen Unterscheidung der beiden Thermorohre wird im Folgenden das Thermorohr für die Messung von Wärmeträger-Temperaturen mit "WT-Thermorohr" bezeichnet. Gemeinsames Merkmal beider Thermorohre ist ein das STM umgebendes Schutzrohr, in welchem das STM eingeführt und ggf. auch axial bewegt werden kann. Damit kein Gas in das WT-Thermorohr eindringen kann, wird das Schutzrohr auf Höhe der Oberseite des oberen Rohrbodens mit dem Rohrboden abgedichtet. Die Abdichtung ist vorzugsweise eine lösbare Verbindung. Als Funktionsprinzip kann eine Stopfbuchsendichtung dienen oder eine Vorrichtung, bei der zwei Ringkeile gegeneinander verschoben werden und den Ringspalt zwischen Rohrinnenwand und Schutzrohr verschließen, oder ein Vorrichtung mit Keilen, die durch Aufweitung eines ringförmigen Abschnittes den Ringspalt verschließt, oder ein Variante einer Klemmringverschraubung, bei der die Kraft radial nach außen wirkt.

In einer einfachen Ausführung wird bei dem WT-Thermorohr ein genau identisches STM verwendet wie bei dem weiter oben beschriebenen KAT-Thermorohr zur Messung der Temperaturen innerhalb einer Katalysatorschüttung. Der Zwischenraum zwischen Schutzrohr und WT-Thermorohr wird durch ein thermisch gut leitendes Material, beispielsweise Aluminiumgranulat, ausgefüllt. Dieses wird unter Verwendung einer Partikelhalterung in gleicher Weise in das WT-Thermorohr eingefüllt wie die Katalysatorpartikel in ein KAT-Thermorohr. Nach dem Einfüllen wird das Schutzrohr gegen den Rohrboden druckfest abgedichtet, um die Ansammlung von explosiblen Gasen im WT-Thermorohr zu verhindern und um zu gewährleisten, dass die Temperatur des Wärmeträgers gemessen wird, und nicht die des Reaktionsgases. Um ein Eindringen von Produktgas von der Unterseite in das WT-Thermorohr zu verhindern, kann optional in die Dichtung zwischen Schutzrohr und oberem Rohrboden eine Spülleitung mit Inertgas angebracht werden. Der benötigte Volumenstrom ist gering, da lediglich das Eindringen des Produktgases in das WT-Thermorohr verhindert werden soll. Eine solche Verfahrensweise ist einfach durchzuführen, da fast alle benötigten Komponenten bereits bekannt sind. Nachteilig ist allerdings, dass die Thermometer nicht genau die achsnormale Temperatur des WT-Thermorohrs messen, sondern eine Mischtemperatur, welche sich aus der Wärmeleitung in Achsrichtung oberhalb und unterhalb der achsnormalen Temperatur ergibt.

Eine besonders genaue Messung der Wärmeträgertemperatur wird erreicht, indem ein Führungsrohr in das WT-Thermorohr geführt wird. Am Führungsrohr axial und radial beabstandet befinden sich federnde Elemente mit einer guten Temperaturteitfähigkeit, die einen wärmeleitenden Kontakt zur WT-Thermorohr-Innenwand halten. Die eigentlichen Thermometer befinden sich an den federnden Elementen, wodurch eine genaue Temperaturmessung möglich ist. Die Signalleitungen werden im Inneren des Thermoschutzrohrs aus dem Reaktor heraus geführt. Das Schutzrohr ist vorzugsweise mit lösbaren Verbindungen am WT-Thermorohr und mit einem sich anschließenden weiterführenden Schutzrohrteil verbunden. Das Thermoschutzrohr ist ebenfalls mit lösbaren Verbindungen mit dem Führungsrohr verbunden.

Hat der Wärmeträger in axialer Richtung des Reaktors einen Temperaturunterschied von nur wenigen Grad, so ist eine Temperaturmessung mit verschieblichem STM unverhältnismäßig. In der Regel kann man sich in diesem Fall auf den Einsatz eines ortsfesten STM beschränken.

Vorzugsweise ist das Schutzrohr aus mindestens zwei Teilen gebildet, die innerhalb der Gaseintritts- oder der Gasaustrittshaube, besonders bevorzugt in derjenigen, die die obere Reaktorhaube bildet, lösbar miteinander verbunden sind.

Mit einer mehrteiligen Ausführung des Schutzrohrs können die Temperaturmesseinrichtungen und die obere Reaktorhaube leicht montiert bzw. demontiert werden. Bei der Montage beispielsweise wird zunächst der untere Teil des Schutzrohrs in das Thermorohr eingeführt. Anschließend wird die obere Reaktorhaube, eventuell mit vormontiertem oberen Schutzrohr, auf den Reaktorhauptteil aufgesetzt und an diesen angeschlossen. Der obere Teil des Schutzrohrs wird dann mit dem unteren Teil des Schutzrohrs verbunden. Nun wird das Thermoschutzrohr von oben in das Schutzrohr eingeführt. Die maschinelle Positioniereinrichtung wird an ihre Position gebracht und die mechanischen und elektrischen Anschlüsse zum Thermoschutzrohr hergestellt. Das Thermoschutzrohr mit Stufenthermometern und Anschlüssen kann auch schon vor der Montage mit der maschinellen Positioniereinrichtung verbunden sein. Aus Handhabungsgründen ist jedoch die getrennte Anordnung vorzuziehen. Der Katalysator wird in einem passenden Zeitabschnitt zwischen den beschriebenen Teilabläufen in die KAT-Thermorohre und in die Reaktionsrohre eingefüllt. Die Demontage erfolgt in entsprechend umgekehrter Reihenfolge.

In vorteilhafter Ausgestaltung der Erfindung ist das Schutzrohr an seinem der maschinellen Positioniereinrichtung abgewandten Ende geschlossen. Mit dieser Maßnahme wird der Fertigungsaufwand erheblich verringert und somit die Wirtschaftlichkeit für den großtechnischen Einsatz beträchtlich erhöht.

Die Erfindung umfasst ferner ein Verfahren zur Messung eines Temperaturprofils in einem erfindungsgemäßen Rohrbündelreaktor, wobei im Rahmen dieser Anmeldung der Begriff "Temperaturprofil" für eine Vielzahl von diskreten, benachbarten Temperaturmesswerten steht, bei denen die Abstände der Messpositionen (Schrittweite) beliebig wählbar sind und der kleinste Abstand von der Genauigkeit der maschinellen Positioniereinrichtung abhängt.

Zur Vorbereitung einer Temperaturmessung werden zunächst die konstruktiven Merkmale des STM festgelegt. Als erstes wird der Mindestmessbereich entsprechend vorgenannter Kriterien festgelegt. Anschließend gibt es zwei alternative Vorgehensweisen: entweder es wird erst der Abstand der einzelnen Thermometer x(TM) zueinander festgelegt und anschließend die Anzahl der einzelnen Thermometer ermittelt, oder es wird erst die Anzahl der Thermometer festgelegt und anschließend wird der Abstand der einzelnen Thermometer x(TM) zueinander ermittelt. Nun wird die Auflösung einer Messreihe festgelegt. Diese wird ausgedrückt durch die Größe des Teilabschnittes Δx, der sich mit Δx = 1 /n * x(TM) berechnet mit x(TM) als der Abstand zwischen zwei benachbarten Thermometern und n als eine ganzzahlige Zahl größer eins. Die Größe des Abstandes Δx kann beliebig klein gewählt werden, ist jedoch abhängig von der gewünschten Auflösung, dem maximalen Auflösungsvermögen der Positioniereinheit und der noch akzeptablen Gesamtzeit eines Messdurchlaufs. Im Extremfall können die Abstände zwischen zwei Messpositionen so klein gewählt werden, dass ein quasikontinuierlicher Temperaturverlauf aufgezeichnet werden kann. In diesem Fall allerdings wird die Gesamtzeit eines Messdurchlaufs sehr lang. Treten innerhalb dieser Gesamtzeit merkliche Prozessänderungen auf, so müssen entweder die Anzahl der Messpositionen verkleinert werden oder die Haltedauer an jeder Messposition verkürzt werden oder beides. Diese Parameter können im Voraus nicht genau festgelegt werden. Sie sind prozessabhängig und müssen für jeden Einzelfall neu festgelegt werden. Die Temperaturmessdaten werden dabei erfindungsgemäß an eine räumlich entfernte Steuer- und Auswerteeinheit über eine Signalleitung oder per Funk übertragen.

Nun wird ein Arbeitsweg nach vorgenannten Kriterien festgelegt, innerhalb dessen die Temperaturen gemessen werden. Der Arbeitsweg umfasst bevorzugt mindestens 100% des Abstandes x(TM) zwischen zwei Thermometern. Zur Erhöhung der Vertrauenswürdigkeit der Messwerte kann der Arbeitsweg des STM um einen oder mehrere Teilabschnitte Δx größer als ein TM-Abstand x(TM) gewählt werden, so dass sich die Messbereiche zweier Thermometer etwas überschneiden. Auf diese Weise können die Temperaturmessungen zweier benachbarter Thermometer auf einfache Weise überprüft werden. Die einzelnen Vorrichtungsteile und die Auswerteeinrichtungen werden entsprechend dimensioniert und eingebaut. Vor Einbau des STM in den Reaktor werden die einzelnen Thermometer des STM kalibriert.

Nachdem das STM eingebaut ist, wird es positioniert, indem eine bekannte Stellung als Bezugspunkt für die Positioniersteuerung definiert wird. In einer ersten Verfahrensweise wird die Temperaturmessung so ausgeführt, dass das STM mit der maschinellen Positioniereinrichtung an eine Startposition gebracht wird, so dass sich ein am Ende eines STM befindliches Thermometer zumindest auf der Höhe eines Endes der Katalysatorschüttung befindet. Nun werden die Temperaturen in einer Messreihe aufgenommen. Die einzelnen Arbeitsschritte innerhalb einer Messreihe sind immer gleich.

Dabei wird zunächst die Temperatur an der Startposition aufgenommen. Dies bedeutet im Einzelnen, dass das STM so lange an dieser Position verbleibt, bis sich die Temperatur nicht mehr wesentlich ändert, also bis die Änderungsgeschwindigkeit der Temperatur hinreichend klein ist. Meistens ist eine 100%ige Annäherung an einen Endwert nicht notwendig. Die Zeitspanne bis zu diesem Punkt ist abhängig von der Schrittweite von einer Messposition zur anderen. Bevorzugt werden diese Vorgänge zunächst mit Handsteuerung vorgenommen. Liegen ausreichend Erfahrungen über das Angleichungsverhalten der Temperaturen vor, so werden diese bevorzugt programmiert und automatisch durchgeführt. Zu berücksichtigen sind ferner die instationären Verhältnisse beim An- und Abfahren des Rohrbündelreaktors einerseits und der stationäre Dauerbetrieb andererseits. Anschließend wird das STM mit der maschinellen Positioniereinheit um den Abstand Δx weiter bewegt. An dieser neuen Messposition wird erneut die Temperatur nach vorstehendem Kriterium aufgenommen und so fort, bis die Temperaturen des gesamten Arbeitsweges ermittelt sind. Da jedes einzelne Thermometer um den Abstand eines Arbeitsweges verschoben wird, sind damit alle Temperaturen des Gesamtmessbereiches mit der Auflösung eines Teilabschnittes Δx erfasst. Auf Grund dieser Daten wird nun der Temperaturextremalwert ermittelt, der bei einer exothermen Reaktion die höchste Temperatur, bei einer endothermen Reaktion die niedrigste Temperatur ist.

Die zeitliche Abfolge der Messreihen ist bei dem erfindungsgemäßen Verfahren nicht eingeschränkt. Die Start- und Endpunkte sowie die Anforderungen an die Messung eines Temperaturprofils werden vom Betreiber nach prozessspezifischen Gesichtspunkten festgelegt. So kann das STM von der Positioniereinheit z.B. von einer oberen Startposition mit vorgenannten Einzelprozeduren zu einer unteren Endposition bewegt werden. Im nächsten Arbeitsgang wird das STM von dieser Position nach oben bewegt, um dabei in entsprechender Weise die Temperaturen von unten nach oben zu messen. In einer anderen Verfahrensweise wird das STM von einer oberen Startposition mit vorgenannten Einzelprozeduren zur Temperaturmessung zu einer unteren Endposition bewegt. Anschließend wird das STM zügig ohne Temperaturmessung wieder zurück zur oberen Startposition gefahren, von wo die Temperaturmessungen in vorbeschriebener Weise wiederholt werden. Unabhängig von der gewählten Betriebsweise werden die Temperaturmessdaten zur Auswertung immer an eine räumlich entfernte Steuer- und Auswerteeinheit über eine Signalleitung oder per Funk übertragen. Innerhalb dieser Auswertung wird manuell oder automatisch das Temperaturmaximum ("Hot Spot") festgestellt. Diese Information kann weiterhin in einem Sicherheitskonzept dazu benutzt werden, um Alarm auszulösen, wenn ein zulässiges Temperaturmaximum überschritten wird.

In einem weiteren Verfahren zur Messung eines Temperaturprofils in einem erfindungsgemäßen Rohrbündelreaktor wird die Temperaturmessung weiter optimiert. Bei dieser Ausgestaltung wird die Temperatur zunächst in einem Schnelldurchlauf mit einer geringen Anzahl von Messpositionen und/oder einer verminderten Messzeit an einer jeden Messposition über den gesamten Arbeitsweg gemessen. Anschließend wird der Extremalwert ermittelt und von diesem ausgehend ein Feinmessbereich davor und dahinter festgelegt, in dem das Temperaturprofil mit kleineren Teilabschnitten Δx mit jeweiligen Messzeiten, die mindestens so groß sind wie die beim Vorlauf, genauer ermittelt wird.

Im Einzelnen wird das Verfahren so durchgeführt, dass das STM mit der maschinellen Positioniereinrichtung nach vorgehend erläuterten Grundsätzen an eine Startposition bewegt wird, dass der Arbeitsweg mit dem Abstand eines Teilabschnittes Δx = 1/n * x(TM) mit n gleich einer ganzzahligen Zahl zwischen 1 und 50 durchlaufen wird mit den Teilarbeitsschritten:
- Warten, bis sich die Temperatur hinreichend an einen Endwert angeglichen hat, d.h. bis die Geschwindigkeit der Temperaturänderung einen vorgegebenen Wert unterschritten hat, oder alternativ Festlegen eines entsprechenden Zeitintervalls; - Bewegen des STM an die nächste Halteposition mit einer Teilabschnittsweite;
- Wiederholen der einzelnen Teilarbeitsschritte bis zum Ende des Arbeitsweges.
Anschließend wird der Temperaturextremalwert ermittelt - bei einer exothermen Reaktion die höchste Temperatur, bei einer endothermen Reaktion die niedrigste Temperatur. Vom Temperaturextremalwert ausgehend wird ein Feinmessbereich davor und dahinter festgelegt, in dem die Temperaturen mit kleineren Teilabschnitten Δx mit jeweiligen Messzeiten, die mindestens so groß sind wie die beim Vorlauf, ermittelt werden. Dabei wird der Feinmessbereich von einem Rand bis zum anderen Rand durchlaufen.

Zur Erhöhung der Prozesssicherheit können die Verfahren neben der Handsteuerung auch automatisch mit einem Programm durchgeführt werden.

Ausser den hier beschriebenen Rohrbündelreaktoren können auch adiabate und isotherme Festbettreaktoren oder Mischformen davon sowie Plattenreaktoren entsprechend ausgebildet sein.

Die Erfindung wir im Folgenden anhand der Zeichnungen beispielshalber noch näher erläutert. Es zeigen:
- Fig. 1: einen Teil-Vertikalschnitt durch eine Ausführungsform eines erfindungsgemäßen Rohrbündelreaktors, mit einem KAT-Thermorohr in vergrößerter Darstellung;
- Fig. 2: in vergrößerter Darstellung den Ausschnitt II aus Fig. 1;
- Fig. 3 a, 3b: jeweils Temperaturprofile eines ortsfesten STM und eines beweglichen STM im Vergleich;
- Fig.4: Temperaturprofile bei unterschiedlichen Außendurchmessern von Schutzrohren in einem Thermorohr;
- Fig. 5: eine ähnliche Darstellung wie Fig. 1, mit einer ersten Ausführungsform eines WT-Thermorohrs in vergrößerter Darstellung;
- Fig. 6: eine ähnliche Darstellung wie Fig. 5, mit einer zweiten Ausführungsform eines WT-Thermorohrs;
- Fig. 7a: in vergrößerter Darstellung den Ausschnitt VIIa aus Fig. 6; und
- Fig. 7b: den Querschnitt längs Linie VIIb - VIIb in Fig. 7a.

Die in den Figuren dargestellten Ausführungsbeispiele erfindungsgemäßer Rohrbündelreaktoren 1 weisen ein (nicht dargestelltes) Bündel Reaktionsrohre, mindestens ein Thermorohr 2, einen oberen und einen unteren Rohrboden 3, 4, einen Mantel 5, eine Gaseintritts- und eine Gasaustrittshaube 6,7 sowie eine maschinelle Positioniereinrichtung 8 auf. Die Gaseintrittshaube 6 ist in den dargestellten Ausführungsbeispielen die obere Reaktorhaube, die Gasaustrittshaube 7 die untere Reaktorhaube; sie werden im folgenden auch als solche bezeichnet.

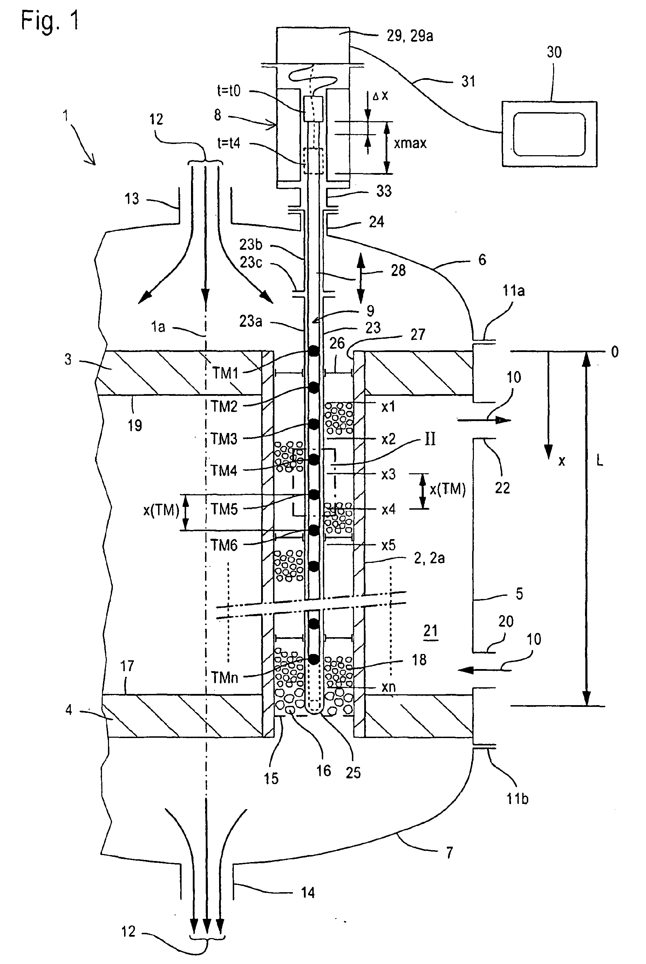

Figur 1 zeigt schematisch ein Stufen-Thermometer (STM) 9 in einem KAT-Thermorohr 2a eines Rohrbündelreaktors 1 mit maschineller Positioniereinrichtung 8. Aus Gründen der Übersichtlichkeit werden keine Reaktionsrohre und nur ein KAT-Thermorohr 2a vergrößert dargestellt. Reaktionsrohre und Thermorohre 2 werden von einem Wärmeträger 10 eines hier nicht dargestellten Wärmeträgersystems gekühlt, welches eine Umwälzpumpe, einen Kühler, einen Aufheizer, Umlenkbleche und noch weitere Komponenten aufweist.

In diesem Ausführungsbeispiel ist ein einzoniger Rohrbündelreaktor 1 mit einer Längsachse 1a gezeigt. Dieser weist eine Vielzahl von hier nicht dargestellten Reaktionsrohren auf, die den gleichen Aufbau besitzen wie das vergrößert dargestellte KAT-Thermorohr 2a, mit dem Unterschied, dass sich in den Reaktionsrohren nur Inertmaterial und Katalysator ohne Einbauten befinden. Sowohl Reaktionsrohre als auch KAT-Thermorohre 2a sind abdichtend in dem oberen Rohrboden 3 und in dem unteren Rohrboden 4 befestigt. Die Rohrböden 3, 4 sind an ihrem Umfang mit dem zylindrischen Mantel 5 verbunden. Der obere Rohrboden 3 ist mit einem oberen Flansch 11a mit der oberen Gaseintrittshaube 6 abgeschlossen, der untere Rohrboden 4 ist mit einem unteren Flansch 11 b mit der unteren Gasaustrittshaube 7 abgeschlossen. Das Reaktionsgas 12 tritt über einen Gaseintrittsstutzen 13 in die Gaseintrittshaube 6 ein, wird dort auf den oberen Rohrboden 3 verteilt, strömt durch die Reaktionsrohre bzw. die KAT-Thermorohre 2a, tritt aus diesen in die Gasaustrittshaube 7 ein und durch einen unteren Gasaustrittsstutzen 14 wieder aus dem Reaktor 1 hinaus.

Das KAT-Thermorohr 2a ist an seinem oberen Ende in dem oberen Rohrboden 3 und an seinem unteren Ende in dem unteren Rohrboden 4 dicht befestigt und steht mit der Gaseintritts- und der Gasaustrittshaube 6, 7 in Strömungsverbindung. Im unteren Bereich des KAT-Thermorohrs 2a befindet sich ein Partikelauflager 15 für Schüttmaterial, bei einem KAT-Thermorohr 2a als Katalysatorauflager 15 bezeichnet. Darauf befindet sich eine Schüttung aus Inertmaterial 16, die bis zur Oberkante 17 des unteren Rohrbodens 4 reicht. Über dem Inertmaterial 16 befindet sich eine Katalysatorschüttung 18, die bis zur Unterkante 19 des oberen Rohrbodens 3 reicht. Gleichfalls ist es z.B. möglich, das Katalysatorauflager 15 auf Höhe der Oberkante 17 des unteren Rohrbodens 4 anzuordnen und den Katalysator 18 direkt darauf anzuordnen, was in dieser Figur nicht gezeigt ist. Das KAT-Thermorohr 2a wird von einem Wärmeträger 10 gekühlt, der in diesem Ausführungsbeispiel durch einen unteren Einlass 20 in den Mantelraum 21 des Reaktors 1 eintritt und durch einen oberen Einlass 22 aus dem Reaktor 1 wieder heraustritt. Eine Umwälzeinrichtung und ein Kühler sind außerhalb des Reaktors 1 angeordnet und hier nicht gezeigt.

Zentral im KAT-Thermorohr 2a ist ein Schutzrohr 23 gelegen. Dieses erstreckt sich nach unten bis zum Katalysatorauflager 15 und nach oben aus der Gaseintrittshaube 6 heraus. Das Schutzrohr 23 ist aus zwei Teilen 23a, 23b gebildet, die in der Gaseintrittshaube 6 mittels Flansche 23c miteinander verbunden sind, um die Montage zu vereinfachen. Zusätzlich kann das Schutzrohr 23, hier nicht gezeigt, im Thermorohr 2 fixiert sein und im Bereich der Gaseintrittshaube 6 einen Kompensator zum Längenausgleich besitzen. In diesem Beispiel führt der obere Teil 23b des Schutzrohrs 23 bis zu einem Messstutzen 24 in der Gaseintrittshaube 6. Der untere Teil 23a des Schutzrohrs 23 erstreckt sich bis zum Katalysatorauflager 15 und ist an seinem dortigen Ende 25 geschlossen. Seitlich ist das Schutzrohr 23 im Bereich des KAT-Thermorohrs 2a mit Abstandshaltern zur Innenwand des KAT-Thermorohrs 2a abgestützt und wird von diesen im KAT-Thermorohr 2a zentriert. In das Schutzrohr ist das Stufen-Thermometer (STM) 9 eingeführt, welches sich in dieser Darstellung an seiner obersten Position befindet. Es beinhaltet eine Vielzahl von Thermometern TM1, TM2, TM3 usw. bis hin zu einem letzten Thermometer TMn am unteren Ende. Das STM 9 ist in dem Schutzrohr 23 axial hin und her verschiebbar (Pfeil 28).

Der Mindestmessbereich kann grundsätzlich frei gewählt werden. Aus Gründen der Übersichtlichkeit erstreckt er sich jedoch bevorzugt von einem Ende x1 der Katalysatorschüttung 18 bis zum anderen Ende xn der Katalysatorschüttung 18. Der Mindestmessbereich ist in mehrere kleine Teilbereiche unterteilt, deren Größe wiederum grundsätzlich frei gewählt werden kann. In einer bevorzugten Ausführung entspricht jedoch ein solcher Teilbereich dem Abstand zweier benachbarter Einzelthermometer x(TM).

Das STM 9 wird mit der maschinellen Positioniereinrichtung 8 innerhalb des Schutzrohrs 23 in Schritten Δx bewegt. Der maximale Bewegungsweg von einer Startposition zu einer Endposition ist der Arbeitsweg xmax. Die Strecke vom ersten Thermometer TM1 bis zum letzten Thermometer TMn zuzüglich Arbeitsweg xmax ist mit L bezeichnet. Die maschinelle Positioniereinrichtung 8 ist auf der oberen Reaktorhaube 6 angeordnet und lösbar an dieser befestigt.

An der maschinellen Positioniereinrichtung 8 ist ein Messwertumwandler 29 befestigt, der wiederum eine Fernübertragungseinrichtung 29a aufweist, die mit einer räumlich getrennten Leitstelle 30 in Verbindung steht. Die Messwerte bzw. -signale werden in dem Messwertumwandler 29 aufbereitet und über die Fernübertragungseinrichtung 29a an die räumlich getrennte Leitstelle 30 übertragen, die über Einrichtungen zum Empfang und zur Weiterverarbeitung der Messsignale sowie über Einrichtungen zur Steuerung der maschinellen Positioniereinrichtung 8 verfügt. Die Messwerte werden entweder über Signalkabel 31 oder per Funk übertragen.

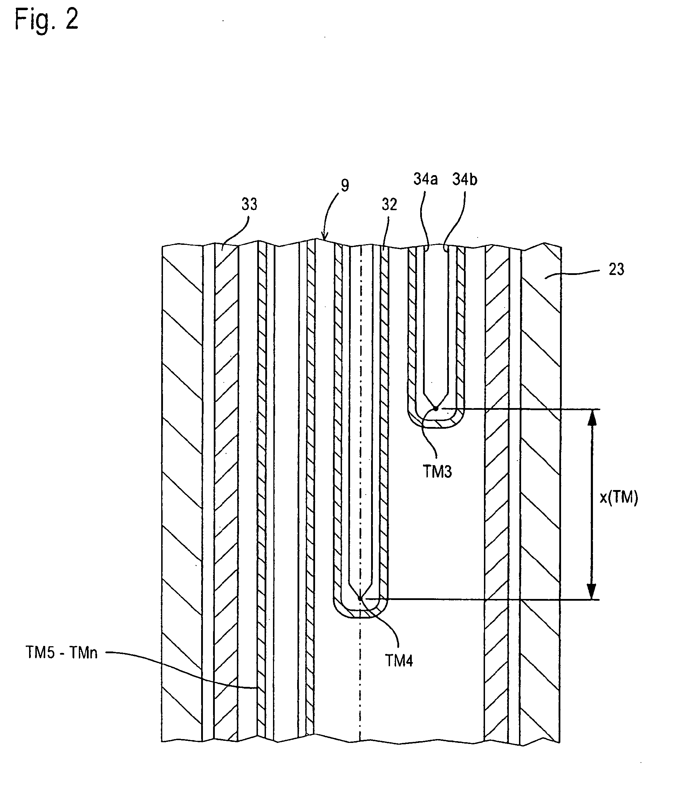

Die Fig. 2 zeigt in der Vergrößerung einen Schnitt durch das in das Schutzrohr 23 eingesetzte Stufen-Thermometer 9, das im dargestellten Ausführungsbeispiel als Stufen-Thermoelement ausgebildet ist. Im Einzelnen sind die Thermoelemente bzw. - meter TM3 und TM4 gezeigt. Jedes Thermoelement ist von einer Thermohülse 32 umschlossen, die alle gemeinsam in einem Thermoschutzrohr 33 angeordnet sind. Das Thermoschutzrohr 33 wiederum ist in dem Schutzrohr 23 angeordnet und in diesem frei beweglich.

Innerhalb einer Thermohülse 32 befinden sich die zwei Thermodrähte 34a, 34b eines Thermoelements, die an ihren unteren Enden miteinander verlötet sind. Die Thermoelemente haben einen axialen Abstand von x(TM) zueinander. Sie sind zu einem Bündel zusammengefasst, welches von dem Thermoschutzrohr 33 umschlossen ist. Dieses in einem Thermoschutzrohr 33 zusammengefasste Bündel bildet zusammen ein STM 9. Das STM 9 wird anschließend in das Schutzrohr 23 hineingeführt. Das Thermoschutzrohr 33 ist mit der maschinellen Positioniereinrichtung 8 verbunden, und zwar vorzugsweise lösbar.

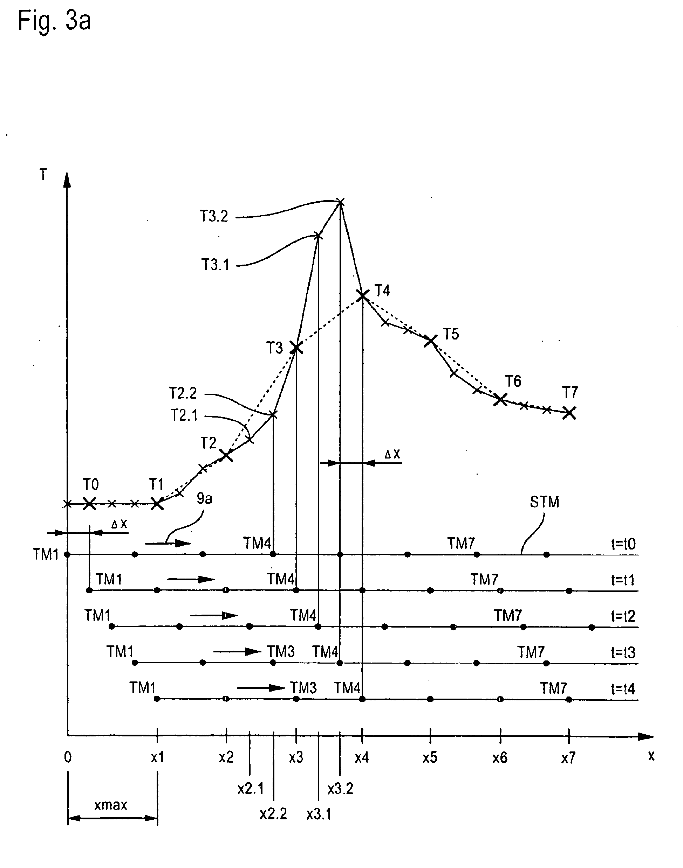

In Fig. 3a sind die Temperaturprofile (Fig. 8) eines ortsfesten STM (gestrichelte Linie) und eines beweglichen STM 9 (Volllinie) zusammen in einem Diagramm aufgetragen. Aufgetragen ist etwa das erste Drittel eines KAT-Thermorohrs 2a. In diesem ersten Drittel befindet sich der Hot Spot. Es handelt sich hier um Temperaturmessungen bei einer exothermen Reaktion.

Auf der Abszisse sind die Messpositionen von x1 bis x7 im Thermorohr 2a aufgetragen, auf der Ordinate die gemessenen Temperaturen T0, T1 bis T7, wobei T0 die vom obersten Thermoelement TM1 auf dem Weg zur ersten Messposition x1 gemessene Temperatur bezeichnet.

Parallel zur Abszisse sind die Positionen der Thermometer bzw. -elemente TM1 bis TM7 für die Zeitpunkte t0 bis t4 eingetragen. Zwischen diesen Zeitpunkten wird das bewegliche STM 9 jeweils um einen Weg Δx in Richtung des Pfeils 9a verschoben, bis der Gesamtverschiebeweg bzw. der Arbeitsweg xmax erreicht ist. Im dargestellten Beispiel entspricht der Arbeitsweg xmax dem Abstand zwischen der Ausgangsposition 0 des STM und der Messposition x1, der vier Δx beträgt. Der Weg Δx beträgt ein Drittel des Abstandes benachbarter Messpositionen x1, x2, x3, x4, x5, x6, x7 und entspricht damit den Abständen der Messpositionen x2, x2.1, x2.2, x3, x3.1, x3.2 und x4 zueinander.

Zur Beschreibung der Zusammenhänge wird hier exemplarisch das Thermoelement TM4 herangezogen. Die erste Temperaturmessung erfolgt am Zeitpunkt t=t0. Zu diesem Zeitpunkt befindet sich das STM 9 an oberster Position, wie in Fig. 1 dargestellt. Das Thermoelement TM4 befindet sich zu diesem Zeitpunkt auf der Messposition x2.2 und misst die Temperatur T2.2. Anschließend, zum Zeitpunkt t=t1, wird das STM 9 mit dem Schritt Δx vorwärts bewegt. Das Thermoelement TM4 steht nun auf der Messposition x3 und misst die Temperatur T3. Entsprechend steht das Thermoelement zu den Zeitpunkten t=t2, t=t3 und t=t4 auf den Messpositionen x3.1, x3.2 bzw. x4 und misst die Temperaturen T3.1, T3.2 bzw. T4. Zum Zeitpunkt t=t4 ist der Arbeitsweg xmax einmal vollständig durchlaufen worden.

Ein Positionsvergleich ergibt, dass zum Zeitpunkt t=t3 z.B. das Thermoelement TM3 die Temperatur an der gleichen Messposition x2.2 misst, an der das Thermoelement TM4 bereits zum Zeitpunkt t=t0 gemessen hat. Sind die Temperaturmesswerte gleich, so ist dies ein Hinweis auf fehlerfreie Thermoelemente und einen stationären Zustand. Weichen die Temperaturmesswerte voneinander ab und zeigen alle anderen Thermoelemente die Temperaturmesswerte des Vorgängers zum Zeitpunkt t=t0 an, so deutet dies auf ein fehlerhaftes Thermoelement TM3 hin. Haben alle anderen Thermoelemente eine ähnliche Abweichung, so weist dies auf einen aktuell instationären Prozess hin. Auf diese Weise also wird eine gegenseitige Kontrolle der Thermoelemente erreicht. In diesem Beispiel ist der Arbeitsweg xmax in vier gleiche Abschnitte Δx geteilt worden. Benachbarte Messwerte sind durch gerade Linien miteinander verbunden, um auszudrücken, dass die zwischen den Messwerten befindlichen Stellen tatsächlich nicht bekannt sind. Ersichtlich ist eine solche Unterteilung noch relativ grob. In der Praxis wird man eine feinere Auflösung mit einer stärkeren Unterteilung wählen, um den tatsächlichen Temperaturverlauf besser anzunähern.

Bei t=t4 ist der Vergleich zur Verwendung eines ortsfesten STM dargestellt. Die Messwerte des ortsfesten STM sind mit gestrichelten Linien miteinander verbunden. Eine solche Messung ergibt ein Temperaturmaximum bei x=x4 von T=T4. Im Gegensatz dazu ergibt das Messverfahren mit den erfindungsgemäßen Maßnahmen ein Temperaturmaximum an der Stelle x=x3.2 von T=T3.2, welches deutlich höher liegt. Der tatsächliche Temperaturverlauf wird so wesentlich besser erfasst.

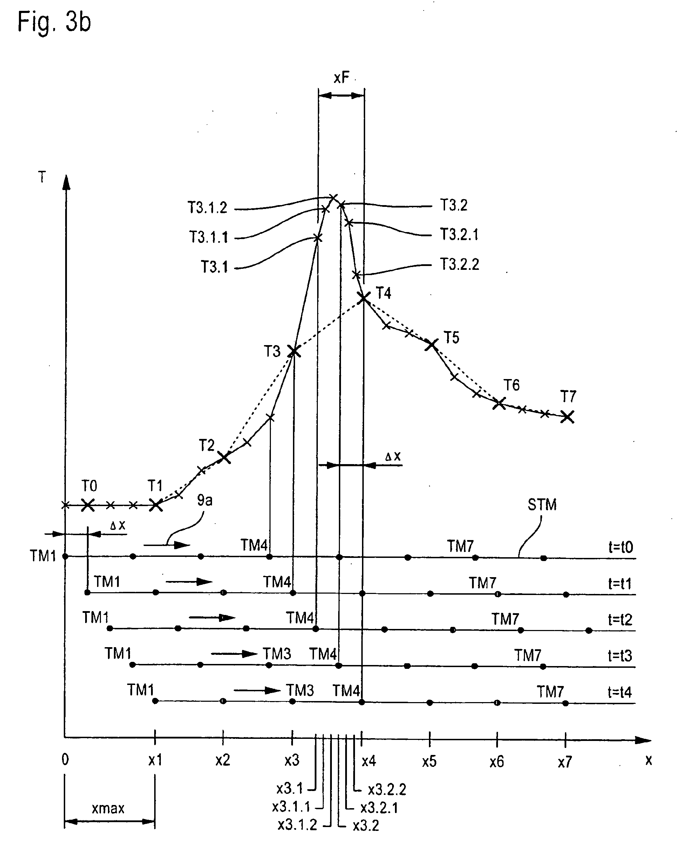

In Fig. 3b ist die Anwendung eines verfeinerten Verfahrens dargestellt, bei dem der Arbeitsweg xmax zunächst im Schnellverfahren mit einer groben Schrittweite Δx - z.B. entsprechend den Verfahren gemäß Fig. 3a - durchlaufen wird. Das bei diesem Schnellverfahren festgestellte Temperaturmaximum liegt an der Stelle x=x3.2 bei T=T3.2. Von diesem Temperaturmaximum ausgehend wird ein Feinmessbereich xF festgelegt, der in diesem Beispiel von einer Schrittweite Δx vor dem Temperaturmaximum bis eine Schrittweite Δx danach reicht. Dieser gesamte Feinmessbereich wird in diesem Beispiel in sechs gleiche Abschnitte geteilt. Nun werden die Temperaturen der Endpunkte dieser kleineren Abschnitte in analoger Weise wie bei vorbeschriebenem Verfahren gemessen. Man stellt fest, dass es ein Temperaturmaximum T=T3.1.2 bei x=x3.1.2 gibt, welches etwas höher liegt als T=T3.2 bei vorangehendem Verfahren. Durch die geeignete Wahl des Ortes des Feinmessbereiches xF kann also der Messbereich verkleinert werden, wodurch sich bei konstanter Anzahl an Messungen pro Messreihe die Teilmessbereiche verkleinern und somit die Auflösung erhöht.

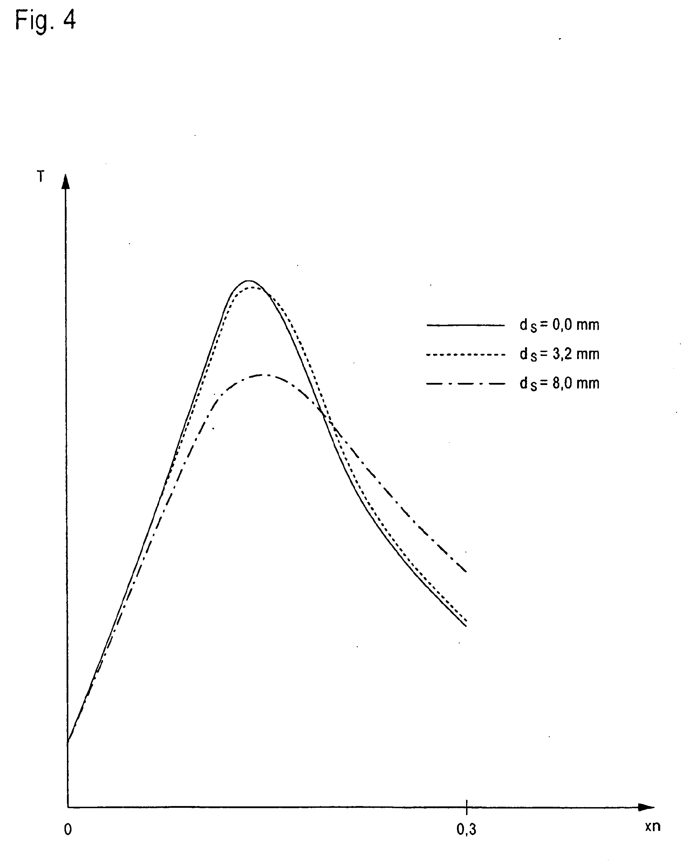

Fig. 4 zeigt drei berechnete Verläufe der Temperaturen bei einer exothermen Reaktion, und zwar für ein Reaktionsrohr ohne Einbauten und für zwei KAT-Thermorohre 2a mit verschiedenen Schutzrohrdurchmessern dS, jeweils vom Rohranfang bis 30% der Gesamtrohrlänge. Als Referenz dient der Temperaturverlauf in dem Reaktionsrohr ohne Einbauten (dS = 0,0 mm), der durch eine durchgezogene Line dargestellt ist. Wird in ein KAT-Thermorohr 2a zentral ein Schutzrohr 23 mit einem Außendurchmesser von dS = 3,2 mm eingebaut, so ist der Einfluss auf den Reaktionsablauf und damit auf die Wärmeentwicklung sehr gering (gestrichelte Linie). Bei einem Schutzrohrdurchmesser von dS = 8,0 mm jedoch erkennt man einen deutlichen Einfluss (strichpunktierte Linie): Das Temperaturmaximum wird deutlich kleiner und breiter und ist in Strömungsrichtung nach hinten verschoben.

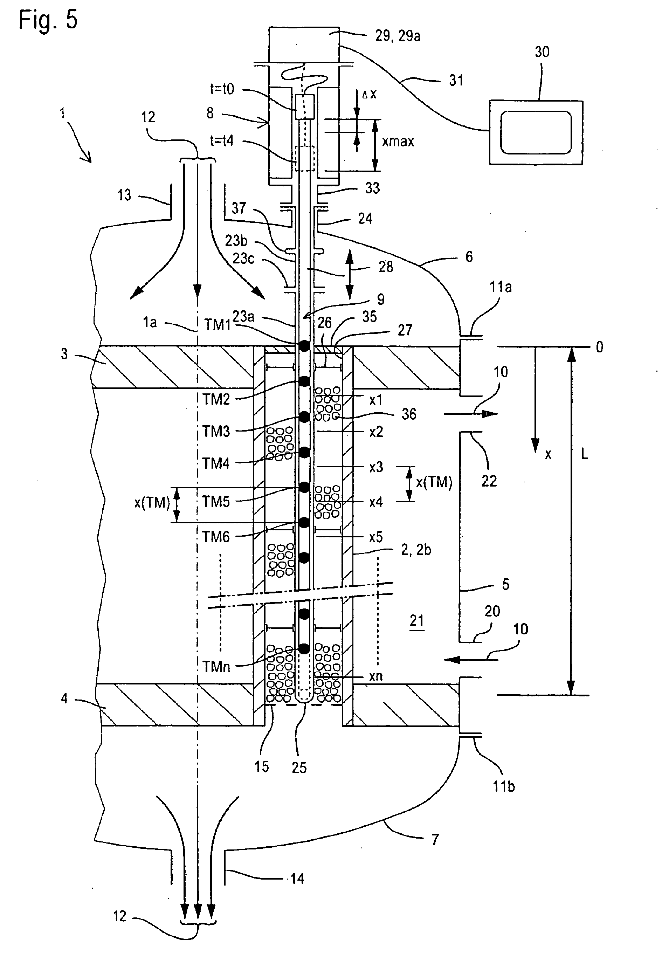

Fig. 5 ist eine ähnliche Darstellung wie Fig. 1, wobei in Fig. 5 ein Wärmeträger(WT)-Thermorohr 2b vergrößert dargestellt ist. Dieses WT-Thermorohr 2b entspricht im Wesentlichen einem KAT-Thermorohr 2a. Der wesentliche Unterschied ist hier die Abdichtung 35 zwischen dem Thermorohr 2 und dem Schutzrohr 23, die ein Eindringen von Reaktionsgas 12 in das Innere des Thermorohres 2 verhindert. In der dargestellten Ausführungsform ist der Zwischenraum zwischen Schutzrohr 23 und Innenwand 27 des WT-Thermorohrs 2b mit einem gut wärmeleitenden Material 36 ausgefüllt, beispielsweise mit Aluminium- oder Eisengranulat. In einer weiteren, hier nicht gezeigten Ausführung kann das Schutzrohr 23 auch exzentrisch und dicht an der Innenwand 27 des WT-Thermorohrs 2b liegen. In diesem Fall wird der übrige Raum innerhalb des WT-Thermorohrs 2b mit isolierendem Material 36 gefüllt, so dass das STM 9 im Wesentlichen direkt die Wandtemperatur des WT-Thermorohrs 2b misst. Zum Ausgleich von unterschiedlichen Längenausdehnungen verfügt das Schutzrohr 23 im Bereich der Gaseintrittshaube 6 über einen Kompensator 37.

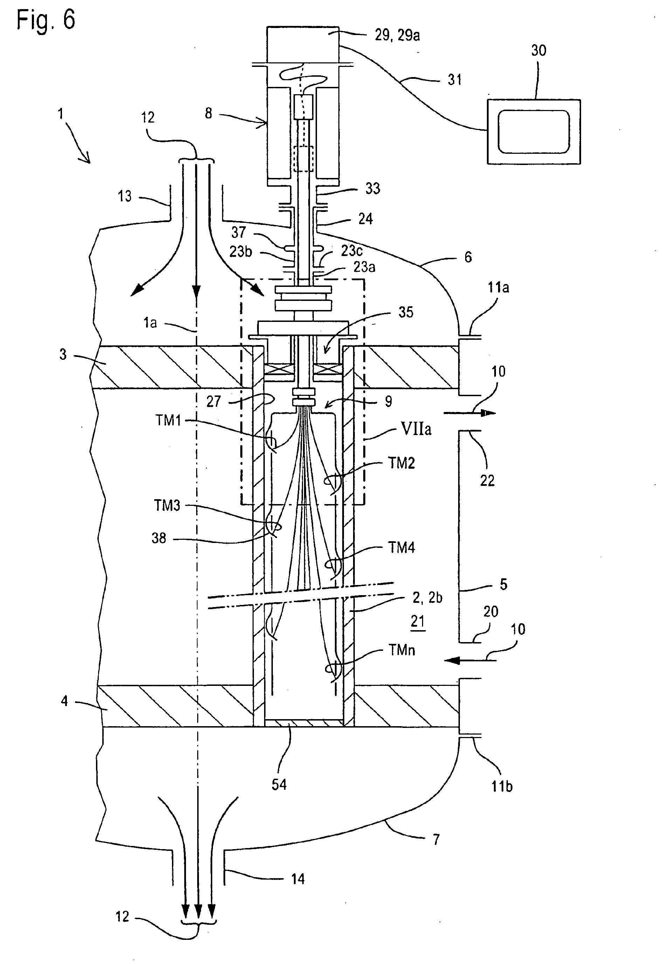

Fig. 6 zeigt eine der Fig. 5 ähnliche Darstellung mit einem weiteren Ausführungsbeispiel für ein WT-Thermorohr 2b. Es weist eine Vielzahl von Thermometern auf, die vorzugsweise als Thermoelemente ausgeführt sind, wobei die thermische Leitfähigkeit von den Thermoelementen zur Thermorohr-Innenwand 27 in dieser Ausführung durch federnde Elemente 38 hergestellt ist.

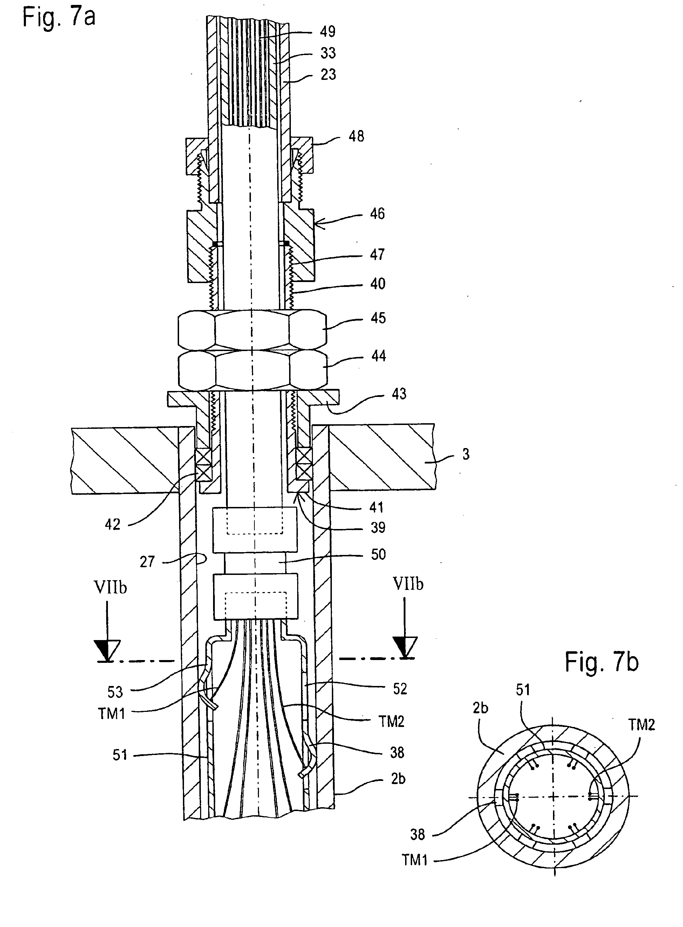

In den Fig. 7a/b ist der Ausschnitt Vlla aus Fig. 6 im Detail dargestellt. Hierbei wird die Abdichtung 35 des Ringraums zwischen Schutzrohr 23 und Thermorohr-Innenwand 27 durch eine Stopfbuchs-Konstruktion ausgebildet. Zur Optimierung der Funktion wird der Abdichtungsbereich in mehrere Einzelteile aufgegliedert. Das zentrale Element der Abdichtung ist eine Stützhülse 39, deren unterer Teil in das WT-Thermorohr 2b hineinreicht und deren mittlerer und oberer Teil ein äußeres Gewinde 40 aufweist. Am unteren Ende der Stützhülse 39 befindet sich ein radial nach außen weisender Kragen 41, welcher als Auflager für eine Stopfbuchspackung 42 dient. Die Stopfbuchspackung 42 wird durch einen Stempel 43 zusammengedrückt. Die dafür notwendige Kraft wird von einer Mutter 44 aufgebracht, welche auf das äußere Gewinde 40 der Stützhülse 39 aufgeschraubt ist. Die Position dieser Mutter 44 wird hier beispielhaft durch eine Kontermutter 45 gesichert. Dieses äußere Gewinde 40 der Stützhülse 39 erstreckt sich über die Kontermutter 45 hinaus noch ein Stück weiter nach oben. Auf das obere Ende dieses Gewindes 40 ist ein Verbindungsstück 46 aufgeschraubt, dessen unteres Ende eine Aufschraubverschraubung 47 aufweist. Das obere Ende des Verbindungsstücks 46 ist als Klemm- oder Schneidringverschraubung 48 ausgeführt, an die das eigentliche Schutzrohr 23 angeschlossen ist. Das Schutzrohr 23 enthält auf seinem Wege vom WT-Thermorohr 2b bis zur maschinellen Positioniereinrichtung 8 einen Kompensator 37 und, falls erforderlich, weitere lösbare Verbindungen 23c.

Durch das Schutzrohr 23 und weiter durch das Verbindungsstück 46 und die Stützhülse 39 erstreckt sich ein Thermoschutzrohr 33, in dem die Signalkabel 49 der Thermoelemente TM1 bis TMn aus dem Reaktor 1 heraus geführt werden. Das Thermoschutzrohr 33 ist an seinem unteren Ende mit einer beidseitigen Klemm- oder Schneidringverschraubung 50 an das STM 9 angeschlossen, welches hier als Stufen-Thermoelement ausgeführt ist. Das STM 9 weist ein Führungsrohr 51 mit einer Vielzahl von federnden Elementen 38 auf, die in einem thermischen Kontakt zur Thermorohr-Innenwand 27 stehen. Dieses federnde Element 38 kann, wie hier dargestellt, so hergestellt werden, dass in das Führungsrohr 51 eine Öffnung 52 eingebracht wird. Durch diese Öffnung 52 kann ein Stanzstempel gefahren werden, der ein federndes Element 38 aus der gegenüber liegenden Führungsrohrseite ausstanzt und dabei eine Verbindung 53 zum Führungsrohr 51 bestehen lässt. Anschließend wird ein Thermoelement (z.B. TM1) an der Innenseite des federnden Elementes 38 befestigt. Dieses Herstellungsverfahren wird mehrfach auf unterschiedlichen axialen Ebenen wiederholt. Dabei werden die Thermoelemente TM1 bis TMn wie in Fig. 7b gezeigt gleichmäßig radial versetzt, wodurch das Führungsrohr 51 radial in der Mitte des WT-Thermorohrs 2b zentriert wird. Die federnden Elemente 38 können, hier nicht gezeigt, auch auf andere Weise hergestellt werden, indem schon vorher vorbereitete federnde Elemente, z.B. durch Elektropunktschweißen, an der Außenwand des Führungsrohrs 51 befestigt werden. Eine Öffnung 52 im Führungsrohr 51, um die Zugänglichkeit zum Thermoelement herzustellen, ist auch hier von Vorteil. An das vorher vorbereitete federnde Element 38 kann z.B. auch eine Anschlusstelle zur passenden Aufnahme eines Thermoelementes angebracht sein, wodurch die Fertigung wesentlich vereinfacht werden kann.

Das untere Ende des WT-Thermorohrs 2b ist vorzugsweise mit einem dichten oder perforierten Verschluss 54 abgeschlossen.

### Bevorzugte Ausführungsformen

1. Rohrbündelreaktor zur Durchführung endothermer oder exothermer Gasphasenreaktionen, mit
   - einem Rohrbündel katalysatorgefüllter Reaktionsrohre, deren Enden abdichtend in Rohrböden befestigt sind und die im Betrieb von einem fluiden Wärmeträger umströmt werden,
   - einem Mantel, der das Rohrbündel umschließt,
   - einer Gaseintrittshaube, die einen der Rohrböden überspannt,
   - einer Gasaustrittshaube, die den anderen Rohrboden überspannt,
   - wobei die Reaktionsrohre mit der Gaseintritts- und der Gasaustrittshaube in Strömungsverbindung stehen, und mit
   - mindestens einem Stufen-Thermometer, das in ein im Rohrbündel angeordnetes Thermorohr eingebaut ist,
   dadurch gekennzeichnet, dass
   das mindestens eine Stufen-Thermometer (9)in dem Thermorohr (2) axial bewegbar ist und der Rohrbündelreaktor (1) eine maschinelle Positioniereinrichtung (8) zur Durchführung der axialen Bewegung des Stufen-Thermometers (9) aufweist.
2. Rohrbündelreaktor nach Ausführungsform 1,
   dadurch gekennzeichnet, dass das mindestens eine Stufen-Thermometer (9) eine Anzahl von Einzelthermometern (TM) aufweist, die im Bereich von 2 bis 50, bevorzugt von 4 bis 40, besonders bevorzugt von 6 bis 30 und weiter bevorzugt von 8 bis 21 liegt, wobei die Einzelthermometer (TM) einen vorgegebenen axialen Abstand (x(TM)) zueinander haben.
3. Rohrbündelreaktor nach Ausführungsform 1 oder 2,
   dadurch gekennzeichnet, dass
   die axialen Abstände (x(TM)) benachbarter Einzelthermometer (TM) innerhalb des mindestens einen Stufen-Thermometers (9) gleich sind.
4. Rohrbündelreaktor nach einer der vorangehenden Ausführungsformen,
   dadurch gekennzeichnet, dass
   das Stufen-Thermometer (9) als Stufen-Thermoelement ausgeführt ist.
5. Rohrbündelreaktor nach einer der vorangehenden Ausführungsformen,
   gekennzeichnet durch mindestens ein zusätzliches im Rohrbündel angeordnetes Thermorohr mit einem axial nicht bewegbaren Stufen-Thermometer, wobei der Anteil der Thermorohre (2) mit axial bewegbaren Stufen-Thermometern (9) an der Gesamtanzahl von Thermorohren kleiner ist als 100%, bevorzugt kleiner als 50% und besonders bevorzugt kleiner als 10% ist.
6. Rohrbündelreaktor nach einer der vorangehenden Ausführungsformen,
   dadurch gekennzeichnet, dass
   das mindestens eine Stufen-Thermometer (9) in dem Thermorohr (2) in einem Schutzrohr (23) angeordnet ist.
7. Rohrbündelreaktor nach Ausführungsform 6,
   dadurch gekennzeichnet, dass
   das Schutzrohr (23) auf der Rohrachse des Thermorohres (2) angeordnet ist.
8. Rohrbündelreaktor nach Ausführungsform 7,
   dadurch gekennzeichnet, dass
   das Schutzrohr (23) mit Abstandshaltern (26) gegen die Innenwand (27) des Thermorohres (2) abgestützt ist.
9. Rohrbündelreaktor nach einer der Ausführungsformen 6 bis 8,
   dadurch gekennzeichnet, dass
   das mindestens eine Stufen-Thermometer (9) in dem Schutzrohr (23) in einem Thermoschutzrohr (33) angeordnet und dieses in dem Schutzrohr (23) axial bewegbar ist.
10. Rohrbündelreaktor nach Ausführungsform 9,
   dadurch gekennzeichnet, dass
   mindestens ein Thermorohr (2a) mit der Gaseintrittshaube (6) und der Gasaustrittshaube (7) in Strömungsverbindung steht und eine Katalysatorfüllung (18) aufweist, die hinsichtlich ihrer Reaktionswirkung der der Reaktionsrohre entspricht, und dass das Schutzrohr (23) zumindest einen Teil der Katalysatorfüllung (18) durchläuft und das Thermoschutzrohr (33) mit dem Stufen-Thermometer (9) zumindest über einen Teil der Katalysatorfüllung (18) sich erstreckt bzw. bewegbar ist.
11. Rohrbündelreaktor nach Ausführungsform 10,
   dadurch gekennzeichnet, dass
   die Abstände (x(TM)) benachbarter Einzelthermometer (TM) des Stufen-Thermometers (9) im Bereich des Hot Spots kleiner sind als im übrigen Bereich.
12. Rohrbündelreaktor nach einer der Ausführungsformen 1 bis 9,
   dadurch gekennzeichnet, dass
   mindestens ein Thermorohr (2b) gegen die Gaseintrittshaube (6) druckfest abgedichtet ist, wobei das Stufen-Thermometer (9) sich durch das gesamte Thermorohr (2b) hindurch erstreckt bzw. dort axial bewegbar ist.
13. Rohrbündelreaktor nach den Ausführungsformen 9 und 12,
   dadurch gekennzeichnet, dass
   der Zwischenraum zwischen der Aussenseite des Schutzrohres (23) und der Innenwand (27) des Thermorohres (2b) mit thermisch leitendem Inertmaterial (36) gefüllt ist.
14. Rohrbündelreaktor nach Ausführungsform 12,
   dadurch gekennzeichnet, dass
   das Stufen-Thermometer (9) direkten Kontakt mit der Innenwand (27) des Thermorohrs (2b) hat.
15. Rohrbündelreaktor nach Ausführungsform 12,
   dadurch gekennzeichnet, dass
   das Stufen-Thermometer (9) mindestens ein thermisch leitendes Federelement (38) aufweist, das Kontakt mit der Innenwand (27) des Thermorohrs (2b) hat.
16. Rohrbündelreaktor nach einer der vorangehenden Ausführungsformen,
   dadurch gekennzeichnet, dass
   das mindestens eine Stufen-Thermometer (9) eine Fernübertragungseinrichtung (29a) aufweist, die die ermittelten Messwerte an eine räumlich getrennte Leitstelle (30) übertragen kann, und dass die maschinelle Positioniereinrichtung (8)
   Einrichtungen zum Empfang von Steuersignalen von dieser Leitstelle (30) aufweist.
17. Rohrbündelreaktor nach einer der vorangehenden Ausführungsformen,
   dadurch gekennzeichnet, dass
   die maschinelle Positioniereinrichtung (8) einen Schrittmotor aufweist, der bevorzugt als Linearmotor ausgeführt ist.
18. Rohrbündelreaktor nach einer der vorangehenden Ausführungsformen,
   dadurch gekennzeichnet, dass
   die maschinelle Positioniereinrichtung (8) dazu eingerichtet ist, über eine Vielzahl von Schritten und Messpositionen mit Handsteuerung und/oder mit einem Steuerungsprogramm betrieben zu werden.
19. Rohrbündelreaktor nach einer der vorangehenden Ausführungsformen,
   dadurch gekennzeichnet, dass
   die maschinelle Positioniereinrichtung (8) dazu eingerichtet ist, das Stufen-Thermometer (9) längs eines maximalen Arbeitsweges xmax zu bewegen, der bis zu 300%, bevorzugt bis zu 200% und besonders bevorzugt 100% eines Abstandes x(TM) benachbarter Einzelthermometer (TM) beträgt.
20. Rohrbündelreaktor nach einer der vorangehenden Ausführungsformen,
   dadurch gekennzeichnet, dass
   die maschinelle Positioniereinrichtung (8) explosionssicher ausgebildet ist entsprechend der am Aufstellungsort geltenden Sicherheitsanforderungen.
21. Rohrbündelreaktor nach einer der vorangehenden Ausführungsformen,
   dadurch gekennzeichnet, dass
   das Schutzrohr (23) aus mindestens zwei Teilen (23a, 23b) gebildet ist, die innerhalb der Gaseintritts- oder der Gasaustrittshaube (6, 7), bevorzugt in derjenigen, die die obere Reaktorhaube bildet, lösbar miteinander verbunden sind.
22. Rohrbündelreaktor nach einer der vorangehenden Ausführungsformen,
   dadurch gekennzeichnet, dass
   das Schutzrohr (23) an seinem der maschinellen Positioniereinrichtung (8) abgewandten Ende (25) geschlossen ist.
23. Verfahren zur Messung eines Temperaturprofils in einem Rohrbündelreaktor nach einer der vorangehenden Ausführungsformen,
   mit den folgenden Schritten
   zur Vorbereitung der Temperaturmessung:
   a) Festlegen des Mindestmessbereiches;
   b) Festlegen des Abstandes (x(TM)) benachbarter Einzelthermometer (TM) zueinander und Ermitteln der Anzahl der erforderlichen Einzelthermometer (TM)
      oder
      Festlegen der Anzahl der Einzelthermometer (TM) und Er
      mitteln des Abstandes (x(TM)) benachbarter Einzelthermometer (TM) zueinander;
   c) Festlegen des Arbeitsweges (xmax) des Stufen-Thermometers (9) in Abhängigkeit vom Abstand (x(TM)) benachbarter Ein zelthermometer (TM);
und zur Durchführung der Temperaturmessung:
d) Bewegen des Stufen-Thermometers (9) an eine Startposition mit der maschinellen Positioniereinrichtung (8) und Definieren des Bezugspunkts;
e) Durchlaufen des Arbeitsweges (xmax) mit einer Schrittweite Δx = 1/n x(TM), wobei n gleich einer ganzzahligen Zahl größer 1 ist, mit den Teilschritten:
   e1) Warten, bis die Geschwindigkeit der Temperaturänderung einen vorgegebenen Wert unterschritten hat oder alternativ Festlegen eines entsprechenden Zeitintervalls;
   e2) Bewegen des Stufen-Thermometers (9) an die nächste Messposition mit dem Abstand der Schrittweite (Δx);
   e3) Wiederholen der einzelnen Teilschritte bis zum Ende des Arbeitsweges xmax);
f) Ermitteln des Temperaturextremalwertes, der bei einer exothermen Reaktion die höchste Temperatur und bei einer endothermen Reaktion die niedrigste Tempera tur ist.
24. Verfahren nach Ausführungsform 23, dadurch gekennzeichnet, dass
   in Schritt e) der Arbeitsweg (xmax) in einem Vorlauf zügig durchlaufen wird, wobei n gleich einer ganzzahligen Zahl zwischen 1 und 50 ist,
   und dass nach Schritt f) folgende Schritte durchgeführt werden:
   g) ausgehend vom Temperaturextremalwert Festlegen eines Feinmessbereiches (xF), der höchstens so groß ist wie der Abstand (x(TM)) benachbarter Einzelthermometer (TM) und dessen Mitte auf der Position des Temperaturextremalwertes liegt;
   h) Messen der Temperaturen von einem Rand des Feinmessbereiches (xF) bis zum anderen Rand mit einer Schrittweite, die kleiner ist als beim Vorlauf, mit einer Messzeit an jeder Messposition, die mindestens so groß ist wie die beim Vorlauf.
25. Verfahren nach Ausführungsform 23 oder 24,
   dadurch gekennzeichnet, dass
   die Temperaturmessung automatisch von einem Programm durchgeführt wird.

## Patentansprüche

1. Rohrbündelreaktor zur Durchführung endothermer oder exothermer Gasphasenreaktionen, mit
- einem Rohrbündel katalysatorgefüllter Reaktionsrohre, deren Enden abdichtend in Rohrböden befestigt sind und die im Betrieb von einem fluiden Wärmeträger umströmt werden,
- einem Mantel, der das Rohrbündel umschließt,
- einer Gaseintrittshaube, die einen der Rohrböden überspannt,
- einer Gasaustrittshaube, die den anderen Rohrboden überspannt,
- wobei die Reaktionsrohre mit der Gaseintritts- und der Gasaustrittshaube in Strömungsverbindung stehen, und mit
- mindestens einem Stufen-Thermometer, das in ein im Rohrbündel angeordnetes
Thermorohr eingebaut ist,
**dadurch gekennzeichnet, dass**
das mindestens eine Stufen-Thermometer (9) in dem Thermorohr (2) axial bewegbar ist, der Rohrbündelreaktor (1) eine maschinelle Positioniereinrichtung (8) zur Durchführung der axialen Bewegung des Stufen-Thermometers (9) aufweist, das mindestens eine Stufen-Thermometer (9) eine Fernübertragungseinrichtung (29a) aufweist, die die ermittelten Messwerte an eine räumlich getrennte Leitstelle (30) übertragen kann, und die maschinelle Positioniereinrichtung (8) Einrichtungen zum Empfang von Steuersignalen von dieser Leitstelle (30) aufweist.

2. Rohrbündelreaktor nach Anspruch 1,
**dadurch gekennzeichnet, dass** das mindestens eine Stufen-Thermometer (9) eine Anzahl von Einzelthermometern (TM) aufweist, die im Bereich von 2 bis 50, bevorzugt von 4 bis 40, besonders bevorzugt von 6 bis 30 und weiter bevorzugt von 8 bis 21 liegt, wobei die Einzelthermometer (TM) einen vorgegebenen axialen Abstand (x(TM)) zueinander haben.

3. Rohrbündelreaktor nach einem der vorangehenden Ansprüche,
**gekennzeichnet durch** mindestens ein zusätzliches im Rohrbündel angeordnetes Thermorohr mit einem axial nicht bewegbaren Stufen-Thermometer, wobei der Anteil der Thermorohre (2) mit axial bewegbaren Stufen-Thermometem (9) an der Gesamtanzahl von Thermorohren kleiner ist als 100%, bevorzugt kleiner als 50% und besonders bevorzugt kleiner als 10% ist.

4. Rohrbündelreaktor nach einem der vorangehenden Ansprüche,
**dadurch gekennzeichnet, dass**
das mindestens eine Stufen-Thermometer (9) in dem Thermorohr (2) in einem Schutzrohr (23) angeordnet ist.

5. Rohrbündelreaktor nach Anspruch 4,
**dadurch gekennzeichnet, dass**
das Schutzrohr (23) auf der Rohrachse des Thermorohres (2) angeordnet ist.

6. Rohrbündelreaktor nach Anspruch 4 oder 5,
**dadurch gekennzeichnet, dass**
das mindestens eine Stufen-Thermometer (9) in dem Schutzrohr (23) in einem Thermoschutzrohr (33) angeordnet und dieses in dem Schutzrohr (23) axial bewegbar ist.

7. Rohrbündelreaktor nach Anspruch 6,
**dadurch gekennzeichnet, dass**
mindestens ein Thermorohr (2a) mit der Gaseintrittshaube (6) und der Gasaustrittshaube (7) in Strömungsverbindung steht und eine Katalysatorfüllung (18) aufweist, die hinsichtlich ihrer Reaktionswirkung der der Reaktionsrohre entspricht, und dass das Schutzrohr (23) zumindest einen Teil der Katalysatorfüllung (18) durchläuft und das Thermoschutzrohr (33) mit dem Stufen-Thermometer (9) zumindest über einen Teil der Katalysatorfüllung (18) sich erstreckt bzw. bewegbar ist.

8. Rohrbündelreaktor nach Anspruch 7,
**dadurch gekennzeichnet, dass**
die Abstände (x(TM)) benachbarter Einzelthermometer (TM) des Stufen-Thermometers (9) im Bereich des Hot Spots kleiner sind als im übrigen Bereich.

9. Rohrbündelreaktor nach einem der Ansprüche 1 bis 6,
**dadurch gekennzeichnet, dass**
mindestens ein Thermorohr (2b) gegen die Gaseintrittshaube (6) druckfest abgedichtet ist, wobei das Stufen-Thermometer (9) sich durch das gesamte Thermorohr (2b) hindurch erstreckt bzw. dort axial bewegbar ist.

10. Rohrbündelreaktor nach den Ansprüchen 6 und 9,
**dadurch gekennzeichnet, dass**
der Zwischenraum zwischen der Aussenseite des Schutzrohres (23) und der Innenwand (27) des Thermorohres (2b) mit thermisch leitendem Inertmaterial (36) gefüllt ist.

11. Rohrbündelreaktor nach einem der vorangehenden Ansprüche,
**dadurch gekennzeichnet, dass**
die maschinelle Positioniereinrichtung (8) einen Schrittmotor aufweist, der bevorzugt als Linearmotor ausgeführt ist.

12. Rohrbündelreaktor nach einem der vorangehenden Ansprüche,
**dadurch gekennzeichnet, dass**
die maschinelle Positioniereinrichtung (8) dazu eingerichtet ist, das Stufen-Thermometer (9) längs eines maximalen Arbeitsweges xmax zu bewegen, der bis zu 300%, bevorzugt bis zu 200% und besonders bevorzugt 100% eines Abstandes x(TM) benachbarter Einzelthermometer (TM) beträgt.

13. Rohrbündelreaktor nach einem der vorangehenden Ansprüche,
**dadurch gekennzeichnet, dass**
das Schutzrohr (23) aus mindestens zwei Teilen (23a, 23b) gebildet ist, die innerhalb der Gaseintritts- oder der Gasaustrittshaube (6, 7), bevorzugt in derjenigen, die die obere Reaktorhaube bildet, lösbar miteinander verbunden sind.

14. Verfahren zur Messung eines Temperaturprofils in einem Rohrbündelreaktor nach einem der vorangehenden Ansprüche,
mit den folgenden Schritten
zur Vorbereitung der Temperaturmessung:
a) Festlegen des Mindestmessbereiches;
b) Festlegen des Abstandes (x(TM)) benachbarter Einzelthermometer (TM) zueinander und Ermitteln der Anzahl der erforderlichen Einzelthermometer (TM)
oder
Festlegen der Anzahl der Einzelthermometer (TM) und Ermitteln des Abstandes (x(TM)) benachbarter Einzelthermometer (TM) zueinander;
c) Festlegen des Arbeitsweges (xmax) des Stufen-Thermometers (9) in Abhängigkeit vom Abstand (x(TM)) benachbarter Einzelthermometer (TM);
und zur Durchführung der Temperaturmessung:
d) Bewegen des Stufen-Thermometers (9) an eine Startposition mit der maschinellen Positioniereinrichtung (8) und Definieren des Bezugspunkts;
e) Durchlaufen des Arbeitsweges (xmax) mit einer Schrittweite Δx = 1/n x(TM), wobei n gleich einer ganzzahligen Zahl größer 1 ist, mit den Teilschritten:
e1) Warten, bis die Geschwindigkeit der Temperaturänderung einen vorgegebenen Wert unterschritten hat oder alternativ Festlegen eines entsprechenden Zeitintervalls;
e2) Bewegen des Stufen-Thermometers (9) an die nächste Messposition mit dem Abstand der Schrittweite (Δx);
e3) Wiederholen der einzelnen Teilschritte bis zum Ende des Arbeitsweges xmax);
f) Ermitteln des Temperaturextremalwertes, der bei einer exothermen Reaktion die höchste Temperatur und bei einer endothermen Reaktion die niedrigste Temperatur ist.

15. Verfahren nach Anspruch 14, **dadurch gekennzeichnet, dass**
in Schritt e) der Arbeitsweg (xmax) in einem Vorlauf zügig durchlaufen wird, wobei n gleich einer ganzzahligen Zahl zwischen 1 und 50 ist,
und dass nach Schritt f) folgende Schritte durchgeführt werden:
g) ausgehend vom Temperaturextremalwert Festlegen eines Feinmessbereiches (xF), der höchstens so groß ist wie der Abstand (x(TM)) benachbarter Einzelthermometer (TM) und dessen Mitte auf der Position des Temperaturextremalwertes liegt;
h) Messen der Temperaturen von einem Rand des Feinmessbereiches (xF) bis zum anderen Rand mit einer Schrittweite, die kleiner ist als beim Vorlauf, mit einer Messzeit an jeder Messposition, die mindestens so groß ist wie die beim Vorlauf.

## Claims

1. A tube bundle reactor for performing endothermal or exothermal gas phase reactions, comprising
- a tube bundle of catalyst-filled reaction tubes whose ends are sealingly mounted in tubesheets and which in operation are surrounded by a fluid heat carrier,
- a shell which encloses the tube bundle,
- a gas inlet head which spans one of the tubesheets,
- a gas outlet head which spans the other tubesheet,
- wherein the reaction tubes are in flow connection with the gas inlet and gas outlet heads, and comprising
- at least one multistage thermometer which is incorporated in a thermometer tube arranged in the tube bundle,
**characterized in that**
the at least one multistage thermometer (9) is axially movable in the thermometer tube (2), the tube bundle reactor (1) includes a mechanical positioning means (8) for performing the axial movement of the multistage thermometer (9), the at least one multistage thermometer (9) includes a remote transmission means (29a) which can transmit the collected measurement values to a spatially separate control center (30), and the mechanical positioning means (8) includes means for receiving control signals from this control center (30).

2. The tube bundle reactor according to claim 1,
**characterized in that** the at least one multistage thermometer (9) includes a number of individual thermometers (TM) which lies in the range from 2 to 50, preferably from 4 to 40, particularly preferably from 6 to 30 and more preferably from 8 to 21, wherein the individual thermometers (TM) have a specified axial distance (x(TM)) from each other.

3. The tube bundle reactor according to any of the preceding claims,
**characterized by** at least one additional thermometer tube arranged in the tube bundle with an axially non-movable multistage thermometer, wherein the amount of thermometer tubes (2) with axially movable multistage thermometers (9) in the total number of thermometer tubes is smaller than 100%, preferably smaller than 50% and particularly preferably smaller than 10%.

4. The tube bundle reactor according to any of the preceding claims,
**characterized in that**
the at least one multistage thermometer (9) in the thermometer tube (2) is arranged in a protective tube (23).

5. The tube bundle reactor according to claim 4,
**characterized in that**
the protective tube (23) is arranged on the tube axis of the thermometer tube (2).

6. The tube bundle reactor according to claim 4 or 5,
**characterized in that**
the at least one multistage thermometer (9) in the protective tube (23) is arranged in a thermo protection tube (33) and the same is axially movable in the protective tube (23).

7. The tube bundle reactor according to claim 6,
**characterized in that**
at least one thermometer tube (2a) is in flow connection with the gas inlet head (6) and the gas outlet head (7) and includes a catalyst filling (18) which in its reaction effect corresponds to that of the reaction tubes, and that the protective tube (23) extends through at least part of the catalyst filling (18) and the thermo protection tube (33) with the multistage thermometer (9) extends or is movable over at least part of the catalyst filling (18).

8. The tube bundle reactor according to claim 7,
**characterized in that**
the distances (x(TM)) of adjacent individual thermometers (TM) of the multistage thermometer (9) are smaller in the region of the hot spot than in the remaining region.

9. The tube bundle reactor according to any of claims 1 to 6,
**characterized in that**
at least one thermometer tube (2b) is sealed pressure-tight against the gas inlet head (6), wherein the multistage thermometer (9) extends through the entire thermometer tube (2b) and is axially movable therein.

10. The tube bundle reactor according to claims 6 and 9,
**characterized in that**
the space between the outside of the protective tube (23) and the inner wall (27) of the thermometer tube (2b) is filled with thermally conducting inert material (36).

11. The tube bundle reactor according to any of the preceding claims,
**characterized in that**
the mechanical positioning means (8) includes a step motor which preferably is configured as a linear motor.

12. The tube bundle reactor according to any of the preceding claims,
**characterized in that**
the mechanical positioning means (8) is equipped to move the multistage thermometer (9) along a maximum working path xmax, which is up to 300%, preferably up to 200% and particularly preferably 100% of a distance x(TM) of adjacent individual thermometers (TM).

13. The tube bundle reactor according to any of the preceding claims, **characterized in that** the protective tube (23) is formed of at least two parts (23a, 23b) which are releasably connected with each other inside the gas inlet or gas outlet head (6, 7), preferably **in that** which forms the upper reactor head.

14. A method for measuring a temperature profile in a tube bundle reactor according to any of the preceding claims,
with the following steps
for preparing the temperature measurement:
a) defining the minimum range of measurement;
b) defining the distance (x(TM)) of adjacent individual thermometers (TM) from each other and determining the number of required individual thermometers (TM) or defining the number of individual thermometers (TM) and determining the distance (x(TM)) of adjacent individual thermometers (TM) from each other;
c) defining the working path (xmax) of the multistage thermometer (9) in dependence on the distance (x(TM)) of adjacent individual thermometers (TM);
and for performing the temperature measurement:
d) moving the multistage thermometer (9) to a start position by means of the mechanical positioning means (8) and defining the reference point;
e) passing through the working path (xmax) with a step width Δx = 1/n • x(TM), wherein n is equal to an integer greater than 1, with the partial steps:
e1) waiting until the rate of the change in temperature has decreased below a specified value or alternatively defining a corresponding time interval;
e2) moving the multistage thermometer (9) to the next measurement position with the distance of the step width (Δx);
e3) repeating the individual partial steps up to the end of the working path (xmax);
f) determining the temperature extreme value, which in an exothermal reaction is the highest temperature and in an endothermal reaction the lowest temperature.

15. The method according to claim 14, **characterized in that**
in step e) the working path (xmax) is quickly passed through in a first run, wherein n is equal to an integer between 1 and 50,
and that after step f) the following steps are performed:
g) proceeding from the temperature extreme value defining a fine range of measurement (xF) which is at most as great as the distance (x(TM)) of adjacent individual thermometers (TM) and whose center lies on the position of the temperature extreme value;
h) measuring the temperatures from one edge of the fine range of measurement (xF) to the other edge with a step width which is smaller than in the first run, with a measurement time at each measurement position which is at least as great as that in the first run.

## Revendications

1. Réacteur à faisceau de tubes pour l'exécution de réactions en phase gazeuse endothermiques ou exothermiques, comprenant
- un faisceau de tubes de réaction remplis de catalyseur, dont les extrémités sont fixées de façon étanche dans des plaques à tubes et autour desquels s'écoule en fonctionnement un fluide caloporteur,
- une enveloppe, qui entoure le faisceau de tubes,
- un capot d'entrée de gaz, qui coiffe l'une des plaques à tubes,
- un capot de sortie de gaz, qui coiffe l'autre des plaques à tubes,
- dans lequel les tubes de réaction communiquent en termes d'écoulement avec le capot d'entrée de gaz et avec le capot de sortie de gaz, et comprenant
- au moins un thermomètre à gradins, qui est intégré dans un tube thermique agencé dans le faisceau de tubes,
**caractérisé en ce que**
ledit au moins un thermomètre à gradins (9) est axialement mobile dans le tube thermique (2), le réacteur à faisceau de tubes (1) comprend un système de positionnement automatique (8) pour exécuter le mouvement axial du thermomètre à gradins (9), ledit au moins un thermomètre à gradins (9) comprend un moyen de télécommunication (29a), qui est capable de transmettre les valeurs de mesuré déterminées à un poste maître (30) séparé dans l'espace, et le système de positionnement automatique (8) comprend des moyens pour la réception de signaux de commande provenant de ce poste maître (30).

2. Réacteur à faisceau de tubes selon la revendication 1,
**caractérisé en ce que** ledit au moins un thermomètre à gradins (9) comprend un nombre de thermomètres individuels (TM) qui est dans la plage de 2 à 50, de préférence 4 à 40, de façon particulièrement préférée de 6 à 30, et de manière encore plus préférée de 8 à 21, les thermomètres individuels (TM) ayant les uns par rapport aux autres une distance axiale prédéterminée (x(TM)).

3. Réacteur à faisceau de tubes selon l'une des revendications précédentes,
**caractérisé par** au moins un tube thermique supplémentaire agencé dans le faisceau de tubes, avec un thermomètre à gradins qui n'est pas axialement déplaçable, la proportion des tubes thermiques (2) avec des thermomètres à gradins axialement déplaçables (9) dans le nombre total de tubes thermiques étant inférieure à 100 %, de préférence inférieure à 50 %, et de façon particulièrement préférée inférieure à 10 %.

4. Réacteur à faisceau de tubes selon l'une des revendications précédentes,
**caractérisé en ce que** ledit au moins un thermomètre à gradins (9) est agencé dans le tube thermique (2) dans un tube protecteur (23).

5. Réacteur à faisceau de tubes selon la revendication 4,
**caractérisé en ce que** le tube protecteur (23) est agencé sur l'axe du tube thermique (2).

6. Réacteur à faisceau de tubes selon la revendication 4 ou 5,
**caractérisé en ce que** ledit au moins un thermomètre à gradins (9) est agencé dans le tube protecteur (23) dans un tube thermo-protecteur (33) et celui-ci est axialement déplaçable dans le tube protecteur (23).

7. Réacteur à faisceau de tubes selon la revendication 6,
**caractérisé en ce qu'**au moins un tube thermique (2a) est en communication d'écoulement avec le capot d'entrée de gaz (6) et avec le capot de sortie de gaz (7) et comporte un remplissage catalyseur (18) qui correspond, quant à son efficacité de réaction, à celle des tubes de réaction, et **en ce que** le tube protecteur (23) traverse au moins une partie du remplissage catalyseur (18), et le tube thermo-protecteur (33) avec le thermomètre à gradins (9) s'étend, ou est déplaçable, sur au moins une partie du remplissage catalyseur (18).

8. Réacteur à faisceau de tubes selon la revendication 7,
**caractérisé en ce que** les distances (x(TM)) de thermomètres individuels voisins (TM) du thermomètre à gradins (9) sont plus petites dans la région du "Hot Spot" (point chaud) que dans la région restante.

9. Réacteur à faisceau de tubes selon l'une des revendications 1 à 6,
**caractérisé en ce qu'**au moins un tube thermique (2b) est étanché de manière résistante à la pression vis-à-vis du capot d'entrée de gaz (6), ledit thermomètre à gradins (9) s'étendant à travers la totalité du tube thermique (2b) ou étant axialement mobile dans celui-ci.

10. Réacteur à faisceau de tubes selon les revendications 6 et 9,
**caractérisé en ce que** l'espace intermédiaire entre le côté extérieur du tube protecteur (23) et la paroi intérieure (27) du tube thermique (2b) est remplie avec un matériau inerte (36) thermoconducteur.

11. Réacteur à faisceau de tubes selon l'une des revendications précédentes,
**caractérisé en ce que** le système de positionnement automatique (8) comprend un moteur pas à pas qui est réalisé de préférence comme un moteur linéaire.

12. Réacteur à faisceau de tubes selon l'une des revendications précédentes,
**caractérisé en ce que** le système de positionnement automatique (8) est conçu pour déplacer le thermomètre à gradins (9) le long d'un trajet de travail maximum xmax qui s'élève jusqu'à 300 %, de préférence jusqu'à 200 %, et de façon particulièrement préférée jusqu'à 100 % de la distance (x(TM)) de thermomètres individuels voisins (TM).

13. Réacteur à faisceau de tubes selon l'une des revendications précédentes,
**caractérisé en ce que** le tube protecteur (23) est formé d'au moins deux parties (23a, 23b) qui sont reliées de façon détachable l'une à l'autre à l'intérieur du capot d'entrée de gaz ou du capot de sortie de gaz (6, 7), de préférence dans celui qui forme le capot supérieur du réacteur.

14. Procédé pour la mesure d'un profil de température dans un réacteur à faisceau de tubes selon l'une des revendications précédentes,
comprenant les étapes suivantes
pour la préparation de la mesure de température :
a) détermination d'une zone de mesure minimum ;
b) détermination de la distance (x(TM)) de thermomètres individuels voisins (TM) les uns par rapport aux autres et calcul du nombre de thermomètres individuels nécessaires (TM) ou détermination du nombre de thermomètres individuels (TM) et calcul de la distance (x(TM)) de thermomètres individuels voisins (TM) les uns par rapport aux autres ;
c) détermination du trajet de travail (xmax) du thermomètre à gradins (9) en fonction de la distance (x(TM)) de thermomètres individuels voisins (TM) ;
et pour l'exécution de la mesure de température :
d) déplacement du thermomètre à gradins (9) à une position de départ avec le système de positionnement automatique (8) et définition du point de référence ;
e) parcours du trajet de travail (xmax) avec un pas ( x = 1/n • x(TM)), o ù n et un nombre entier supérieur à 1, avec les étapes partielles :
e1) attente jusqu'à ce que la vitesse de variation de température soit passée au-dessous d'une valeur prédéterminée, ou en variante détermination d'un intervalle temporel correspondant ;
e2) déplacement du thermomètre à gradins (9) à la position de mesure suivante avec la distance du pas (x) ;
e3) répétition des étapes partielles individuelles jusqu'à la fin du trajet de travail (xmax) ;
f) détermination de la valeur extrême de température, c'est-à-dire la température la plus élevée dans le cas d'une réaction exothermique et la température la plus basse dans le cas d'une réaction endothermique.

15. Procédé selon la revendication 14, **caractérisé en ce que**
dans l'étape e) le trajet de travail (xmax) est parcouru rapidement dans une passe préliminaire, n étant égal à un nombre entier entre 1 et 50,
et **en ce que** l'on exécute les étapes suivantes après l'étape f) :
g) en partant de la valeur extrême de température, détermination d'une plage de mesure fine (xF), qui est au maximum aussi élevée que la distance (x(TM)) de thermomètres individuels voisins (TM) et dont le milieu se trouve à la position de la valeur extrême de température ;
h) mesure des températures depuis un bord de la plage de mesure fine (xF) jusqu'à l'autre bord avec un pas qui est inférieur à celui de la passe préliminaire, avec un temps de mesure à chaque position de mesure qui est au moins aussi important que lors de la passe préliminaire.
